# EUROPEAN PATENT APPLICATION

(11) **EP 1 099 866 A2**
(43) Date of publication of application: **16.05.2001**
(21) Application number: 00117753.4
(22) Date of filing: 17.08.2000
(51) Int. Cl.: F16B 37/06

(54) **Self-attaching fastening element**

(30) Priority: 10.11.1999 JP 32017899; 28.01.2000 JP 2000020689
(71) Applicant: Nagayama Electronic Industry Co., Ltd., Naga-gun, Wakayama (JP)
(72) Inventor: Nagayama, Yutaka, Kishiwada-shi, Osaka (JP)
(74) Representative: Bockhorni, Josef, Dipl.-Ing.

(57) **Abstract**

A T nut has a cap portion 45 integrally formed continuous from a tip end portion of a flarable portion 34. At a connecting region between flarable portion 34 and cap portion 45, an inner surface 44 of flarable portion 34 is formed recessed outward. Because of this structure, a metal fastening member can be provided which has such a structure that enables driving into an object of fixing exactly, without the necessity of providing a receiving hole in advance.

## Description

### BACKGROUND OF THE INVENTION

### Field of the Invention

The present invention relates to a metal fastening member such as a T nut, a rivet and the like or to an outer casing member for a bullet having a hollow shaft portion. More specifically, the present invention relates to a metal fastening member and an outer casing member for a bullet having such a structure in that a cap provided at a tip end portion is easily come off when driven into an object.

### Description of the Background Art

A conventional T nut having a thin flarable portion (prospective caulked portion) in the shaft portion is disclosed, for example, in United States Patent No. 5,238,344 or 5,348,432.

A T nut 11 described in United States Patent No. 5,238,344 has such a shape as shown in Figs. 95A and 95B, which is provided as an integral part by sheet metal working of an iron based metal plate, for example, which T nut includes a shaft portion 12 and a flange portion 13 protruding outward from a first end portion of the shaft portion 12.

Shaft portion 12 has a hollow cylindrical shape with uniform outer diameter, a flarable portion 14 at a second end portion opposite to the first end portion, and a female screw 15a formed on an inner peripheral surface of a female screw forming portion 15 other than the flarable portion 14. Flarable portion 14 is made thinner in thickness as compared with female screw forming portion 15. Therefore, when female screw 15a is to be formed, the thread can be formed either from the side of the first end portion or the second end portion of the shaft portion 12.

Flange portion 13 has two pawls 16 formed by mushing part of an outer peripheral edge of flange portion 13 from the outer side to the inner side, which pawls oppose to each other at 180°, protruding toward the second end portion of shaft portion 12. As a result of formation of the pawls 16, notches 17 having approximately semi circular cross section are left at the outer peripheral edge of flange portion 13.

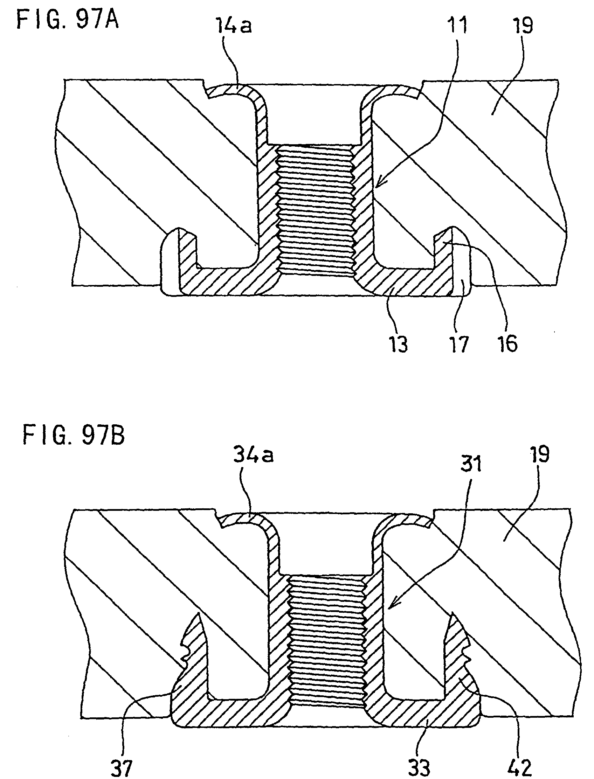

Such a T nut 11 is used, for example, in the manner as shown in Fig. 97A. Referring to Fig. 97A, shaft portion 12 is first inserted to an object 19 of fixing formed of resin material or wood and having a receiving hole 18 formed in advance, and in this state, the flarable portion 14 is caulked by a caulker, so that a caulked portion 14a is formed on one surface side of object 19 of fixing. At the same time, pawls 16 are driven into the other surface of the object 19 of fixing. Thus T nut 11 is completely fixed in object 19.

A T nut 31 described in United States Patent No. 5,348,432 has such a shape as shown in Figs. 96A and 96B. Similar to T nut 11 described above, it is provided as an integral body by sheet metal working of an iron based metal plate, for example, and the T nut has a shaft portion 32 and a flange portion 33 protruding outward from the first end portion of shaft portion 32. The shaft portion 32 has a female screw forming portion 35 where a female screw 36 is formed on the inner periphery, and the T nut also has a flarable portion (prospective caulked portion) 34. The structure of T nut 31 is different from that of T nut 11 in that two pairs of pawls 37 and 38 as well as 39 and 40 extending from the first end portion toward the second end portion are arranged opposing in the radial direction of flange portion 33, so that flange portion 33 as a whole has substantially octagonal shape.

Such a T nut 31 is generally called a "hopper feed T nut", since the T nut 1 can be smoothly moved along a feed track which is provided on a nut fixer for fixing the nut to the object, enabling automatic feeding of the T nuts. For example, British Patent No. 1,157,734 describes a type of such a hopper feed T nut in detail.

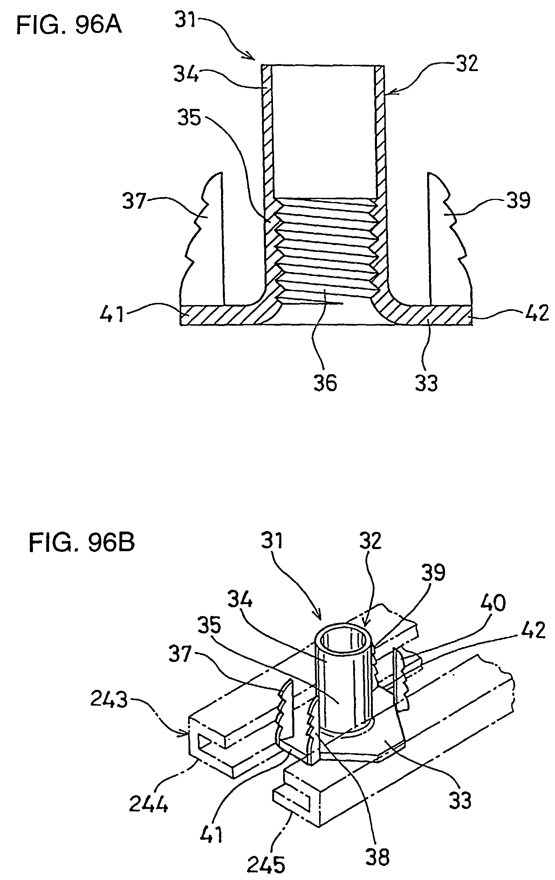

Fig. 96B shows the aforementioned feed track 43 in phantom lines. Feed track 43 includes a pair of guide rails 44 and 45 having C∼shaped sections, which are symmetrically arranged to be opposite to each other. Flange portion 33 is received by each of the guide rails 44 and 45, so that T nut 31 is moved along feed track 43 in a prescribed posture while locating the pawls 37 to 40 between the guide rails 10 and 11. Though not shown, feed track 43 is frequently bent to bring the T nut 31 into a desired posture, so that shaft portion 32 is aligned with a hole provided in an object, not shown.

T nut 31 is used in the similar manner as T nut 11, as shown in Fig. 97B, for example. More specifically, shaft portion 32 of T nut 31 is inserted to a through hole 18 of an object 19 of fixing, flarable portion 34 is caulked by a caulker in this state, and caulked portion 34a is formed on the side of one surface of object 19. At the same time, pawls 37 to 40 are driven into the other surface of object 19.

In such a state of fixing of T nut 31, rotation of T nut 31 relative to the object 19 of fixing is inhibited by pawl 37 to 40, and flange portion 33 and caulked portion 34a grip the object 19, so that T nut 31 is not slipped from through hole 18. Thus, T nut 31 is firmly fixed on object 19, and the fixed state is maintained semi-permanently.

When the above described T nut is to be driven to the object of fixing under automatic control, however, it is necessary to provide a receiving hole exactly at the expected position to which T nut is driven, of the object of fixing. Further, it is necessary to position the T nut exactly at the receiving hole and to drive the T nut into the object.

Therefore, when the T nut is to be driven to the object of fixing by automatic control, exact positioning is necessary both in the process of forming receiving hole and the process of driving the T nut, which results in lower efficiency of working and increase in cost of driving.

### SUMMARY OF THE INVENTION

The present invention was made to solve the above described problems and its object is to provide a metal fastening member having such a structure that enables exact driving into the object of fixing without the necessity of forming a receiving hole in advance.

Another object of the present invention is to provide an outer casing member for a bullet of which tip end portion surely tears simultaneously with collision at the object.

According to an aspect, the present invention provides a metal fastening member including a cylindrical shaft portion having a flarable portion which is expected to be caulked and a shaft body portion provided continuous from the flarable portion, and a cap portion provided continuous from an end portion of the flarable portion opposite to the shaft body portion, and formed of an integral metal material, wherein a connecting region between the flarable portion and the cap portion has such a shape in that, a force bending outward the flarable portion is exerted when a pressing force is applied to the tip end surface of the cap portion in a direction from the side of the cap portion to the side of the flarable portion, so that the cap portion goes off from the flarable portion by the bending force and the flarable portion comes to be bent outward.

In the above described structure, when the metal fastening member is driven into the object of fixing, the object of fixing is removed by the cap portion, and therefore it is unnecessary to provide in advance a receiving hole for driving the metal fastening member in the object of fixing.

As an example of a preferred embodiment, a structure may be adapted in which an inner surface of the flarable portion is recessed outward at the connecting region between the flarable portion and the cap portion, so that immediately after driving the metal fastening member into the object of fixing, when the cap portion collides an abutting member provided outside, the cap portion is kept in the state colliding against the abutting member, whereas an external force for caulking is applied to the flarable portion. At this time, as the inner surface of the flarable portion is recessed outward, the external force for caulking flows outward. As a result, caulking of the flarable portion is ensured.

In order to implement the present invention in a more preferred state, the following structure may be adopted.

Preferably, in the connecting region between the flarable portion and the cap portion, the inner surface of the flarable portion is curved gradually outward, toward the cap portion.

Preferably, in the connecting region between the flarable portion and the cap portion, the flarable portion has its thickness gradually reduced outward, toward the cap portion.

Preferably, on an outer peripheral surface of the shaft portion at the connecting region between the flarable portion and the cap portion, a groove is provided extending in the peripheral direction.

By adapting the above described structures, the external force applied to the flarable portion flows outward in a preferable state and, as a result, caulking of the flarable portion can be ensured.

In another preferred embodiment, the cap portion has such a shape that has a dent in the central portion. Alternatively, the cap portion has an opening at the central portion. A female screw is provided at an end surface of the opening. Alternatively, the cap portion may have a shape that is protruded at the central portion.

In another preferred embodiment, a female screw is formed at least on a part of the inner periphery of the shaft body portion. Preferably, a flange portion protruding outward is provided at an end portion of the shaft body portion opposite to the flarable portion.

Preferably, the flange has a polygonal shape and includes, on the outer periphery of the flange, a pawl extending toward the side of the cap portion. Alternatively, the flange preferably has a polygonal shape and includes a protruded portion extending toward the side of the cap portion.

Preferably, the flange has a circular shape and includes a pawl on the outer periphery of the flange extending toward the side of the cap portion. Alternatively, the flange preferably has a circular shape and includes a protruded portion extending toward the side of the cap portion. Such a structure enables used of the metal fastening member as a T nut or a rivet.

Preferably, in an approximately annular region providing a periphery of the shaft portion on a side closer to the shaft body portion than the region which will be flared by the caulking of the flarable portion, a portion of small thickness is further provided by locally making thinner the thickness of the shaft portion, which thin portion has sufficient strength so as not to be torn by an axial force exerted in the state of use when the nut is caulked and fixed in the object and breaks when a tractive force larger than a prescribed magnitude is applied in the axial direction, separating the shaft portion into two.

Because of this structure, when a jig that exerts a tractive force in the central axial direction of the shaft portion on the portion of small thickness provided in the shaft portion is used with the fastening member caulked in the object, it becomes possible to tear the metal fastening member at this portion and to separate the member into two easily. As a result, the metal fastening member which has been fixed by the flange portion and the caulked portion gripping the object from the upper and lower surfaces can be easily removed from the object.

In a preferred embodiment, the flarable portion of the shaft portion has an inner diameter larger than the inner diameter of the shaft body portion, and has an outer diameter larger than the outer diameter of the shaft body portion.

In a preferred embodiment of the present invention, the shaft body portion of the shaft portion has an inner diameter larger than the inner diameter of the flarable portion, and an outer diameter larger than the outer diameter of the flarable portion.

The following structure may be adopted for the metal fastening member of a more preferred embodiment.

For example, the present invention provides a metal fastening member including a cylindrical shaft portion having a flarable portion which is expected to be caulked and a shaft body portion provided continuous from the flarable portion, and a flange portion extending outward to an end portion of the shaft body portion opposite to the flarable portion, and formed of an integral metal material, wherein a female screw is formed at least at a part of an inner periphery of the shaft body portion, the flange has a polygonal shape and includes a pawl on the outer periphery extending toward the side of the cap portion, the gap portion has an opening with a female screw provided on an end surface of the opening, and the connecting region between the flarable portion and the cap portion has such a shape that a force bending outward the flarable portion is exerted when a pressing force is applied to the tip end surface of the cap portion in a direction from the side of the cap portion to the side of the flarable portion, so that the cap portion goes off from the flarable portion and the flarable portion is bent outward by the bending force.

As to another preferred embodiment, the present invention provides a metal fastening member including a cylindrical shaft portion having a flarable portion which is expected to be caulked and a shaft body portion provided continuous from the flarable portion, and a flange portion extending outward to an end portion of the shaft body portion opposite to the flarable portion, and formed of an integral metal material, wherein a female screw is formed at least at a part of an inner periphery of the shaft body portion, the flange has a circular shape and includes a pawl on the outer periphery extending toward the side of the cap portion, the gap portion has an opening with a female screw provided on an end surface of the opening, and the connecting region between the flarable portion and the cap portion has such a shape that a force bending outward the flarable portion is exerted when a pressing force is applied to the tip end surface of the cap portion in a direction from the side of the cap portion to the side of the flarable portion, so that the cap portion goes off from the flarable portion and the flarable portion is bent outward by the bending force.

As a further preferred embodiment, the present invention provides a metal fastening member including a cylindrical shaft portion having a flarable portion which is expected to be caulked and a shaft body portion provided continuous from the flarable portion, and a flange portion extending outward to an end portion of the shaft body portion opposite to the flarable portion, and formed of an integral metal material, wherein the shaft body portion of the shaft portion has an inner diameter larger than the inner diameter of the flarable portion and an outer diameter larger than the outer diameter of the flarable portion, a female screw is formed at least at a part of an inner periphery of the shaft body portion, the flange has a polygonal shape and includes a pawl on the outer periphery extending toward the side of the cap portion, the gap portion has an opening with a female screw provided on an end surface of the opening, and the cap portion and the connecting region between the flarable portion and the cap portion has such a shape that a force bending outward the flarable portion is exerted when a pressing force is applied to the tip end surface of the cap portion in a direction from the side of the cap portion to the side of the flarable portion, so that the cap portion goes off from the flarable portion and the flarable portion is bent outward by the bending force.

As a further preferred embodiment, the present invention provides a metal fastening member including a cylindrical shaft portion having a flarable portion which is expected to be caulked and a shaft body portion provided continuous from the flarable portion, and a flange portion extending outward to an end portion of the shaft body portion opposite to the flarable portion, and formed of an integral metal material, wherein the shaft body portion of the shaft portion has an inner diameter larger than the inner diameter of the flarable portion and an outer diameter larger than the outer diameter of the flarable portion, a female screw is formed at least at a part of an inner periphery of the shaft body portion, the flange has a circular shape and includes a pawl on the outer periphery extending toward the side of the cap portion, the gap portion has an opening with a female screw provided on an end surface of the opening, and the connecting region between the flarable portion and the cap portion has such a shape that a force bending outward the flarable portion is exerted when a pressing force is applied to the tip end surface of the cap portion in a direction from the side of the cap portion to the side of the flarable portion, so that the cap portion goes off from the flarable portion and the flarable portion is bent outward by the bending force.

Preferably, a groove is provided extending in the peripheral direction on an outer peripheral surface of the shaft portion at a connecting region between the flarable portion and the cap portion.

Preferably, in the connecting region between the flarable portion and the cap portion, the inner surface of the flarable portion is provided recessed outward.

Preferably, in the connecting region between the flarable portion and the cap portion, the inner surface of the flarable portion is curved gradually outward, toward the cap portion.

Preferably, at the connecting region between the flarable portion and the cap portion, the flarable portion is provided with its thickness gradually reduced toward the cap portion.

Preferably, in an approximately annular region providing a periphery of the shaft portion on a side closer to the shaft body portion than the region which will be flared by the caulking of the flarable portion, a portion of small thickness is further provided by locally making thinner the thickness of the shaft portion, which thin portion has sufficient strength so as not to be torn by an axial force exerted in the state of use when the nut is caulked and fixed in the object and breaks when a tractive force larger than a prescribed magnitude is applied in the axial direction, separating the shaft portion into two.

More preferably, the flarable portion of the shaft portion has an inner diameter larger than the inner diameter of the shaft body portion and has an outer diameter larger than the outer diameter of the shaft body portion.

According to another aspect, the present invention provides an outer casing member for a bullet including a cylindrical shaft portion and a cap portion provided continuous from one end of the shaft portion and having a protruded central portion, formed of an integral metal material, wherein a connecting region between the shaft portion and the cap portion has such a shape in that a force bending the shaft portion outward exerts when a pressing force is applied to the tip end surface of the shaft portion in a direction from the side of the cap portion to the side of the shaft portion, so that the cap portion goes off from the shaft portion and the shaft portion is bent outward by the bending force.

When the outer casing member for a bullet having such a structure is applied to a bullet, the cap portion provided at the tip end portion is torn off, causing explosion, so that the object can effectively be broken by the explosion.

In order to implement the present invention in a preferable state, at the connecting region between the shaft portion and the cap portion, an inner surface of the shaft portion is recessed outward. Alternatively, at the connecting region between the shaft portion and the cap portion, preferably, the inner surface of the shaft portion is provided gradually curved outward toward the cap portion. Preferably, at the connecting region between the shaft portion and the cap portion, the shaft portion is provided with its thickness made thinner gradually outward, toward the cap portion.
Preferably, a groove provided extending in the peripheral direction is provided on an outer peripheral surface at the connecting region between the shaft portion and the cap portion. Preferably, the cap portion has a dent in the central portion. Alternatively, a female screw is formed at least partially on an inner periphery of the shaft portion. Alternatively, a male screw is preferably formed at least partially on an outer periphery of the shaft portion.

By adapting such a structure, the cap portion provided at the tip end is surely torn, causing explosion when the outer casing member for the bullet collides against the object, and hence the object can effectively be broken by the explosion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1A is a central vertical section of a T nut 61A in accordance with a first embodiment of the present invention, and Fig. 1B is a perspective view of T nut 61A.
Fig. 2A is a central vertical section of a T nut 61B in accordance with a second embodiment of the present invention, and Fig. 2B is a perspective view of T nut 61B.
Fig. 3A is a central vertical section of a T nut 61C in accordance with a third embodiment of the present invention, and Fig. 3B is a perspective view of T nut 61C.
Fig. 4A is a central vertical section of a T nut 61D in accordance with a fourth embodiment of the present invention, and Fig. 4B is a perspective view of T nut 61D.
Fig. 5A is a first cross section representing a structure of the connecting region, Fig. 5B is a second cross section representing a structure of the connecting region and Fig. 5C is a third cross section representing a structure of the connecting region.
Fig. 6A is a first cross section representing a structure of the connecting region, Fig. 6B is a second cross section representing a structure of the connecting region and Fig. 6C is a third cross section representing a structure of the connecting region.
Fig. 7A is a first cross section representing a structure of the connecting region, Fig. 7B is a second cross section representing a structure of the connecting region and Fig. 7C is a third cross section representing a structure of the connecting region.
Fig. 8A is a first cross section representing a structure of the connecting region, Fig. 8B is a second cross section representing a structure of the connecting region and Fig. 8C is a third cross section representing a structure of the connecting region.
Fig. 9A is a first cross section representing a structure of the connecting region, Fig. 9B is a second cross section representing a structure of the connecting region and Fig. 9C is a third cross section representing a structure of the connecting region.
Fig. 10A is a first cross section representing a structure of the connecting region, Fig. 10B is a second cross section representing a structure of the connecting region and Fig. 10C is a third cross section representing a structure of the connecting region.
Fig. 11A is a first cross section representing a structure of the connecting region, Fig. 11B is a second cross section representing a structure of the connecting region and Fig. 11C is a third cross section representing a structure of the connecting region.
Fig. 12A is a first cross section representing a structure of the connecting region, Fig. 12B is a second cross section representing a structure of the connecting region and Fig. 12C is a third cross section representing a structure of the connecting region.
Fig. 13A is a first cross section representing a structure of the connecting region, Fig. 13B is a second cross section representing a structure of the connecting region and Fig. 13C is a third cross section representing a structure of the connecting region.
Figs. 14A to 14C represent cross sectional shapes of the groove.
Fig. 15A is a first cross section representing a structure of the connecting region, Fig. 15B is a second cross section representing a structure of the connecting region and Fig. 15C is a third cross section representing a structure of the connecting region.
Fig. 16A is a first cross section representing a structure of the connecting region, Fig. 16B is a second cross section representing a structure of the connecting region and Fig. 16C is a third cross section representing a structure of the connecting region.
Fig. 17A is a first cross section representing a structure of the connecting region, Fig. 17B is a second cross section representing a structure of the connecting region and Fig. 17C is a third cross section representing a structure of the connecting region.
Figs. 18 to 22 are cross sections representing the structure of the connecting region.
Fig. 23 is a central vertical section of a T nut 61E in accordance with a fifth embodiment of the present invention.
Fig. 24 is an enlarged cross section representing a structure of the connecting region of T nut 61E in accordance with the fifth embodiment.
Figs. 25 to 27 represent first to third steps of the process of driving T nut 61A into an object 19 of fixing, in accordance with a sixth embodiment of the present invention.
Fig. 28A is a cross sectional view showing T nut 61A driven into object 19 in accordance with the sixth embodiment, Fig. 28B is a cross section representing a cap portion 45 and Fig. 28C is a cross section representing a broken piece 19A of the object.
Fig. 29 is a central vertical section of a T nut 61M in accordance with a modification of the sixth embodiment of the present invention.
Figs. 30 to 32 show the first to third steps representing driving of the T nut 61M in accordance with the modification of the sixth embodiment of the present invention, into an object of fixing 19.
Fig. 33A is a cross section showing a state in which the T nut 61M in accordance with the modification of the sixth embodiment of the present invention is driven into the object of fixing 19, Fig. 33B is a cross section showing a cap portion 45, and Fig. 33C is a cross section showing a broken piece 19a of the object.
Fig. 34 is a central vertical section of T nut 61N in accordance with a modification of the sixth embodiment of the present invention.
Fig. 35A is a central vertical section of a T nut 61F in accordance with a seventh embodiment of the present invention and Fig. 35B is a perspective view of T nut 61F.
Fig. 36A is a central vertical section of a T nut 61G in accordance with an eighth embodiment of the present invention and Fig. 36B is a perspective view of T nut 61G.
Fig. 37A is a cross section showing a state in which a jig 170 is pressed from caulked portion 34, in accordance with a method of removing T nut 61F caulked and fixed in object 19, from object 19 in accordance with a ninth embodiment of the present invention, and Fig. 37B is a cross section showing a state in which by the method of removal shown in Fig. 37A, T nut 61F is separated into upper and lower two parts, torn at the annular groove 50 by the pressing force F of jig 170.
Fig. 38 is a cross section of T nut 61F separated into upper and lower two parts.
Fig. 39A is a partial cross section representing the manner of forming annular grooves 20, 50 of T nut in accordance with a tenth embodiment of the present invention, and Figs. 39B and 39C are cross sections representing two modifications of the manner of forming annular grooves 20, 50 of the T nut in accordance with the tenth embodiment.
Figs. 40A to 40C represent cross sectional shapes of annular grooves 20, 50.
Fig. 41A is a partial cross section showing the manner of forming an annular thin portion 70 in a T nut 71A in accordance with an eleventh embodiment of the present invention, and Fig. 41B is a cross sectional view showing, in enlargement, the vicinity of annular thin portion 70 of the T nut of Fig. 41A.
Fig. 42 is a cross sectional view of a T nut 71B which is a modification of T nut 71A in accordance with the eleventh embodiment of the present invention.
Fig. 43A is a central vertical section of T nut 81A in accordance with a twelfth embodiment of the present invention, and Fig. 43B is a central vertical section of T nut 91A which is a modification of the twelfth embodiment of the present invention.
Fig. 44A is a central vertical section of a T nut 81B which is a modification of the twelfth embodiment of the present invention, and Fig. 44B is a central vertical section of a T nut 91B in accordance with a modification of the twelfth embodiment of the present invention.
Fig. 45A is a central vertical section of a T nut 101A in accordance with a thirteenth embodiment of the present invention, and Fig. 45B is a central vertical section of a T nut 111A in accordance with a modification of the thirteenth embodiment of the present invention.
Fig. 46A is a central vertical section of a T nut 101B in accordance with a modification of the thirteenth embodiment of the present invention, and Fig. 46B is a central vertical section of a T nut 111B in accordance with a modification of the thirteenth embodiment of the present invention.
Fig. 47 is a central vertical section of a T nut 181A in accordance with a fourteenth embodiment of the present invention.
Fig. 48 is a central vertical section of a T nut 181B in accordance with a fourteenth embodiment of the present invention.
Fig. 49 is a central vertical section of a T nut 181C in accordance with a fourteenth embodiment of the present invention.
Fig. 50 is a central vertical section of a T nut 181D in accordance with a fourteenth embodiment of the present invention.
Fig. 51 is a central vertical section of a T nut 181E in accordance with a fourteenth embodiment of the present invention.
Fig. 52 is a central vertical section of a T nut 181F in accordance with a fourteenth embodiment of the present invention.
Fig. 53 is a central vertical section of a T nut 181G in accordance with a fourteenth embodiment of the present invention.
Fig. 54 is a central vertical section of a T nut 631A in accordance with a fifteenth embodiment of the present invention.
Fig. 55 is a central vertical section of a T nut 641A in accordance with a modification of the fifteenth embodiment of the present invention.
Fig. 56 is a central vertical section of a T nut 631B in accordance with a modification of the fifteenth embodiment of the present invention.
Fig. 57 is a central vertical section of a T nut 641B in accordance with a modification of the fifteenth embodiment of the present invention.
Fig. 58A is a central vertical section of a T nut 231A in accordance with a sixteenth embodiment of the present invention, and Fig. 58B is a central vertical section of a rivet 421A in accordance with the sixteenth embodiment of the present invention.
Fig. 59A is a plan view representing a modification of the sixteenth embodiment of the present invention, and Fig. 59B is a side view representing the modification of the sixteenth embodiment of the present invention.
Fig. 60A is a central vertical section of a T nut 231B in accordance with a modification of the sixteenth embodiment of the present invention, and Fig. 60B is a central vertical section of a rivet 421B in accordance with a modification of the sixteenth embodiment of the present invention.
Fig. 61A is a plan view representing a modification of the sixteenth embodiment of the present invention, and Fig. 61B is a side view representing the modification of the sixteenth embodiment of the present invention.
Fig. 62A is a central vertical section of a T nut 231C in accordance with a modification of the sixteenth embodiment of the present invention, and Fig. 62B is a central vertical section of a rivet 421C in accordance with a modification of the sixteenth embodiment of the present invention.
Fig. 63A is a plan view representing a modification of the sixteenth embodiment of the present invention, and Fig. 63B is a side view representing the modification of the sixteenth embodiment of the present invention.
Fig. 64A is a central vertical section of a T nut 231D in accordance with a modification of the sixteenth embodiment of the present invention, and Fig. 64B is a central vertical section of a rivet 421D in accordance with the sixteenth embodiment of the present invention.
Fig. 65A is a plan view representing a modification of the sixteenth embodiment of the present invention, and Fig. 65B is a side view representing a modification of the sixteenth embodiment of the present invention.
Fig. 66A is a central vertical section of a T nut 491A in accordance with a seventeenth embodiment of the present invention, and Fig. 66B is a plan view thereof.
Fig. 67A is a central vertical section of a T nut 491B in accordance with a modification of the seventeenth embodiment of the present invention, and Fig. 67B is a plan view thereof.
Fig. 68A is a central vertical section of a T nut 491C in accordance with a modification of the seventeenth embodiment of the present invention, and Fig. 68B is a plan view thereof.
Fig. 69A is a central vertical section of a T nut 501A in accordance with a modification of the seventeenth embodiment of the present invention, and Fig. 69B is a plan view thereof.
Fig. 70A is a central vertical section of a T nut 501B in accordance with a modification of the seventeenth embodiment of the present invention, and Fig. 70B is a plan view thereof.
Fig. 71A is a central vertical section of a T nut 501C in accordance with a modification of the seventeenth embodiment of the present invention, and Fig. 71B is a plan view thereof.
Fig. 72A is a central vertical section of a T nut 511A in accordance with an eighteenth embodiment of the present invention, and Fig. 72B is a plan view thereof.
Fig. 73A is a central vertical section of a T nut 511B in accordance with a modification of the eighteenth embodiment of the present invention, and Fig. 73B is a plan view thereof.
Fig. 74A is a central vertical section of a T nut 521A in accordance with a modification of the eighteenth embodiment of the present invention, and Fig. 74B is a plan view thereof.
Fig. 75A is a central vertical section of a T nut 521B in accordance with a modification of the eighteenth embodiment of the present invention, and Fig. 75B is a plan view thereof.
Fig. 76A is a central vertical section of a T nut 51A in accordance with a nineteenth embodiment of the present invention, and Fig. 76B is a perspective view thereof.
Fig. 77A is a central vertical section of a T nut 51B in accordance with a twentieth embodiment of the present invention, and Fig. 77B is a perspective view thereof.
Fig. 78A is a central vertical section of a T nut 51C in accordance with a twenty-first embodiment of the present invention, and Fig. 78B is a perspective view thereof.
Fig. 79A is a central vertical section of a T nut 51D in accordance with a twenty-second embodiment of the present invention, and Fig. 79B is a perspective view thereof.
Fig. 80A is a central vertical section of a T nut 51E in accordance with a twenty-third embodiment of the present invention, and Fig. 80B is a perspective view thereof.
Fig. 81A is a central vertical section of a T nut 51F in accordance with a twenty-fourth embodiment of the present invention, and Fig. 81B is a perspective view thereof.
Fig. 82A is a central vertical section of a T nut 61H in accordance with a twenty-fifth embodiment of the present invention, and Fig. 82B is a perspective view thereof.
Fig. 83A is a plan view of a modification of T nut 61H in accordance with a twenty-fifth embodiment of the present invention, and Fig. 83B is a side view thereof.
Fig. 84A is a central vertical section of a T nut 61I in accordance with a twenty-sixth embodiment of the present invention, and Fig. 84B is a perspective view thereof.
Fig. 85A is a plan view of a modification of T nut 61I in accordance with the twenty-sixth embodiment of the present invention, and Fig. 85B is a side view thereof.
Fig. 86A is a central vertical section of an outer casing member 710A for a bullet in accordance with a twenty-seventh embodiment of the present invention, and Fig. 86B is a perspective view thereof.
Fig. 87 is a central vertical section of an outer casing member 710B for a bullet in accordance with a modification of the outer casing member in accordance with the twenty-seventh embodiment of the present invention.
Fig. 88A is a central vertical section of an outer casing member 710C for a bullet in accordance with a twenty-eighth embodiment of the present invention, and Fig. 88B is a perspective view thereof.
Fig. 89 is a central vertical section of an outer casing member 710D for a bullet in accordance with a modification of the outer casing member in accordance with the twenty-eighth embodiment of the present invention.
Fig. 90A is a central vertical section of an outer casing member 710E for a bullet in accordance with a twenty-ninth embodiment of the present invention, and Fig. 90B is a perspective view thereof.
Fig. 91 is a central vertical section of an outer casing member 710F for a bullet in accordance with a modification of the outer casing member in accordance with the twenty-ninth embodiment of the present invention.
Fig. 92A is a central vertical section of an outer casing member 710G in accordance with a thirtieth embodiment of the present invention, and Fig. 92B is a perspective view thereof.
Fig. 93 is a central vertical section of an outer casing member 710H for a bullet in accordance with a modification of the outer casing member in accordance with the thirtieth embodiment of the present invention.
Fig. 94A is a partial cross section showing, in enlargement, a structure having an irregular portion provided at a female screw forming portion of the T nut in accordance with a thirty-first embodiment of the present invention, and Fig. 94B is a cross section taken along the line X-X of Fig. 94A.
Fig. 95A is a central vertical section of a conventional T nut 11, and Fig. 95B is a perspective view thereof.
Fig. 96A is a central vertical section of a conventional T nut 31, and Fig. 96B is a perspective view thereof.
Fig. 97A is a cross section showing the state of driving the conventional T nut 11, and Fig. 97B is a cross section showing the state of driving the conventional T nut 31.

### DESCRIPTION OF THE PREFERRED EMBODIMENTS

Embodiments of the present invention will be described with reference to the figures.

### (First Embodiment: Shape of T nut 61A)

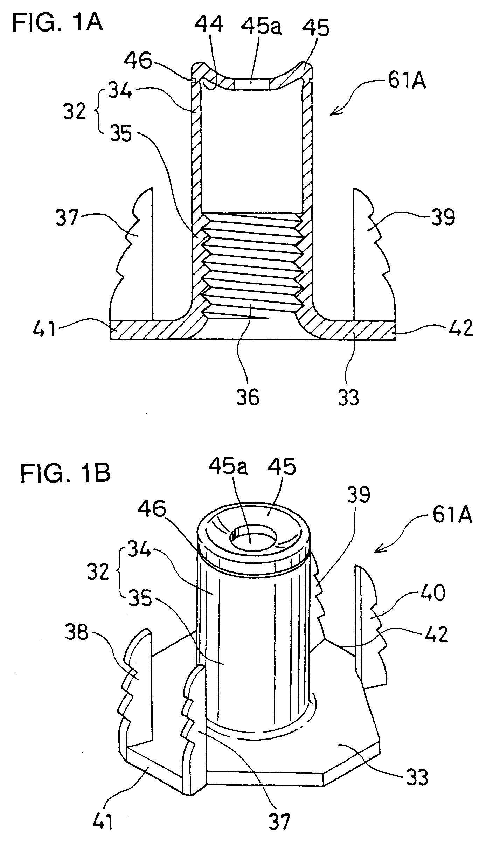

As shown in Figs. 1A and 1B, T nut 61A in accordance with the first embodiment of the present invention has a shaft portion 32 and a flange portion 33 of which shapes are basically the same as those of the conventional T nut 31 described in U. S. Patent No. 5,348,432, which has been described with reference to Fig. 96A. Therefore, common components will be denoted by the same reference characters and detailed description thereof will not be repeated.

T nut 61A in accordance with the present embodiment differs from T nut 31 of the prior art described above in that a cap portion 45 is provided integrally, continuous from a tip end portion of flarable portion 34. In T nut 61A in accordance with the present invention, cap portion 45 has a dent at the central portion, and an opening 45a is provided at the central portion in view of processing of female screw forming portion 36 by a bent shank tap or the like.

Further, in the connecting region between flarable portion 34 and cap portion 45, an inner surface 44 of flarable portion 34 is provided recessed outward. Specific shape will be described later, and the shape of the connecting region is only an example. Essentially, any shape may be employed provided that when a pressing force is applied to a tip end surface of cap portion 45 in a direction from the side of cap portion 45 to flarable portion 34, a force bending the flarable portion 34 outward is exerted, so that cap portion 45 goes off from flarable portion 34 and flarable portion 34 is bent outward. The same applies to other embodiments described in the following. Further, over the entire outer periphery of shaft portion 32 at the interface between flarable portion 34 and female screw forming portion 35, an annular groove 46 is provided.

### (Second Embodiment: Shape of T nut 61B)

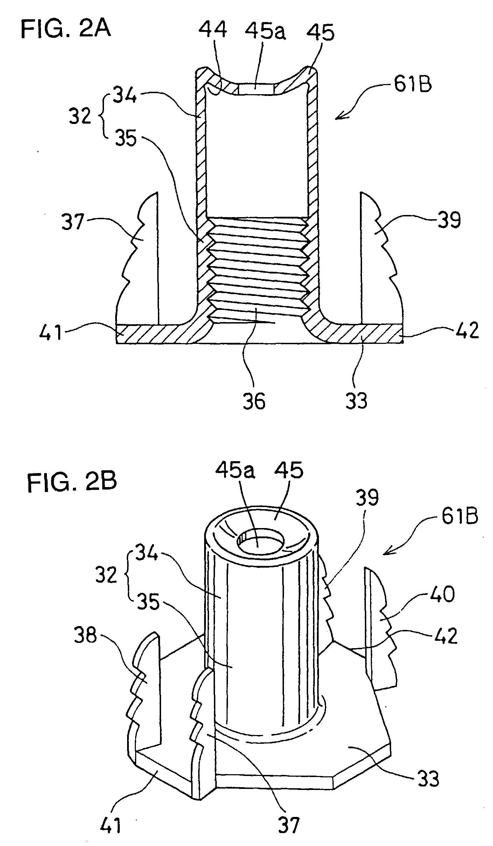

The shape of a T nut 61B in accordance with the second embodiment of the present invention is basically the same as T nut 61A in accordance with the first embodiment, as can be seen from Figs. 2A and 2B. Therefore, common components will be denoted by the same reference characters, and detailed description thereof will not be repeated.

T nut 61B in accordance with the present embodiment is different from T nut 61A in accordance with the first embodiment in that annular groove 46 is not provided over the entire periphery of the outer periphery of shaft portion 32 at the interface between flarable portion 34 and female screw forming portion 35. Except this point, the structure is the same.

### (Third Embodiment: Shape of T nut 61C)

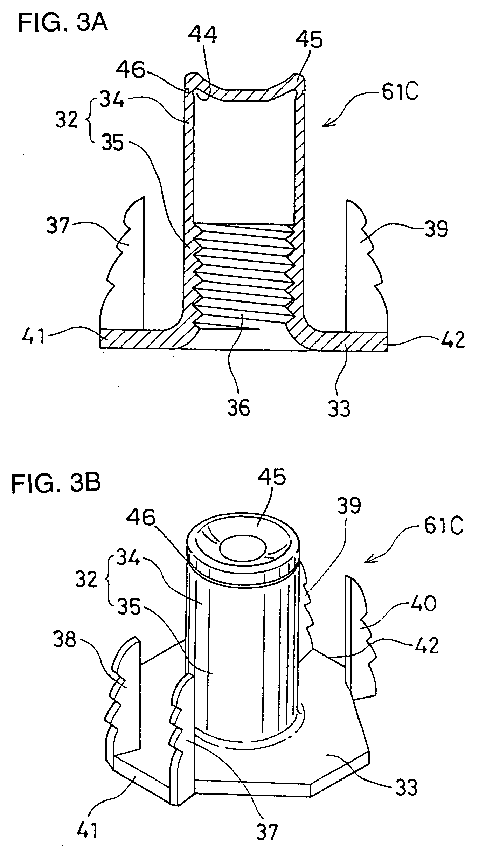

The shape of a T nut 61C in accordance with the third embodiment of the present invention is basically the same as T nut 61A in accordance with the first embodiment, as can be seen from Figs. 3A and 3B. Therefore, common components will be denoted by the same reference characters, and detailed description thereof will not be repeated.

T nut 61C of the present embodiment is different from T nut 61A of the first embodiment in that opening 45A is not provided. Except this point, the structure is the same.

### (Fourth Embodiment: Shape of T nut 61D)

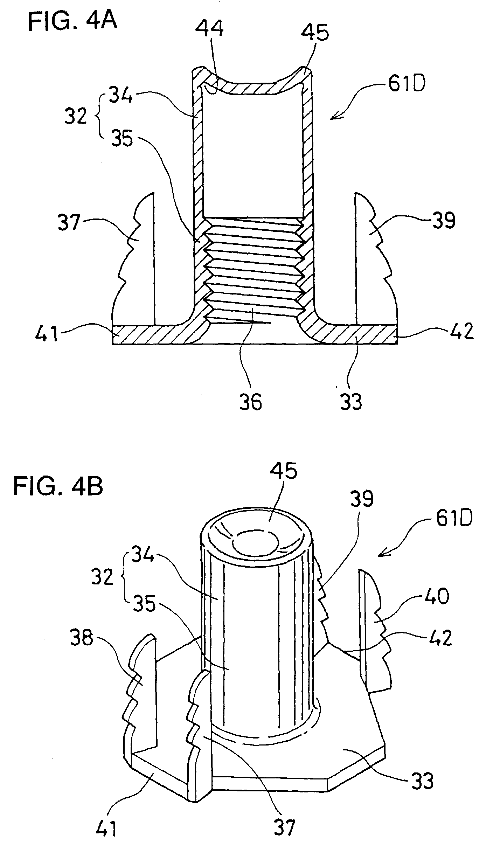

The shape of a T nut 61D in accordance with the fourth embodiment of the present invention is basically the same as T nut 61A in accordance with the first embodiment, as can be seen from Figs. 4A and 4B. Therefore, common components will be denoted by the same reference characters, and detailed description thereof will not be repeated.

T nut 61D in accordance with the present embodiment is different from T nut 61A in accordance with the first embodiment in that annular groove 46 is not provided over the entire periphery of the outer periphery of shaft portion 32 at the interface between flarable portion 34 and female screw forming portion 35, and that opening 45a is not provided. Except these points, the structure is the same.

### <Shape of Connecting Region>

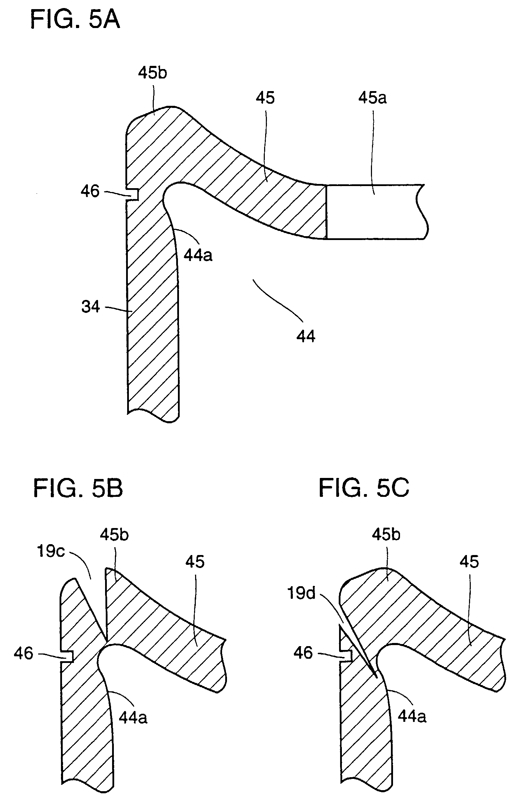

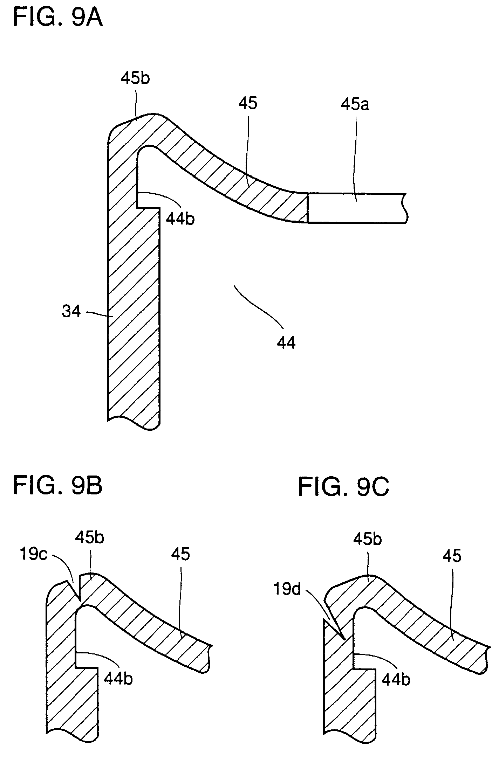

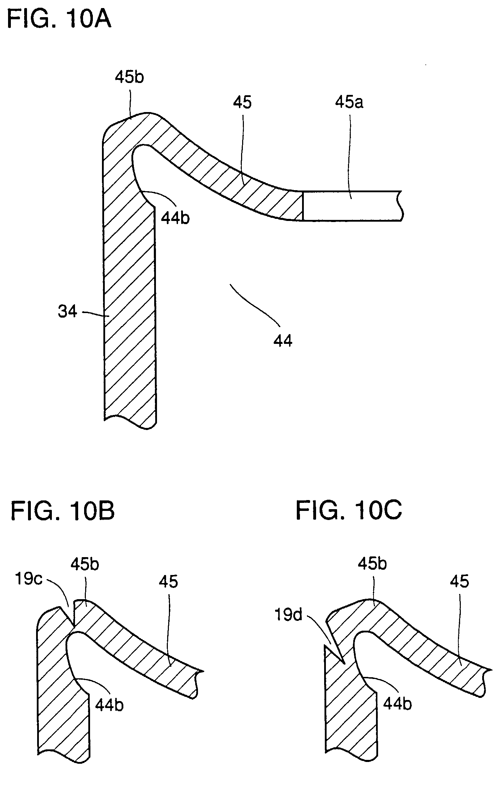

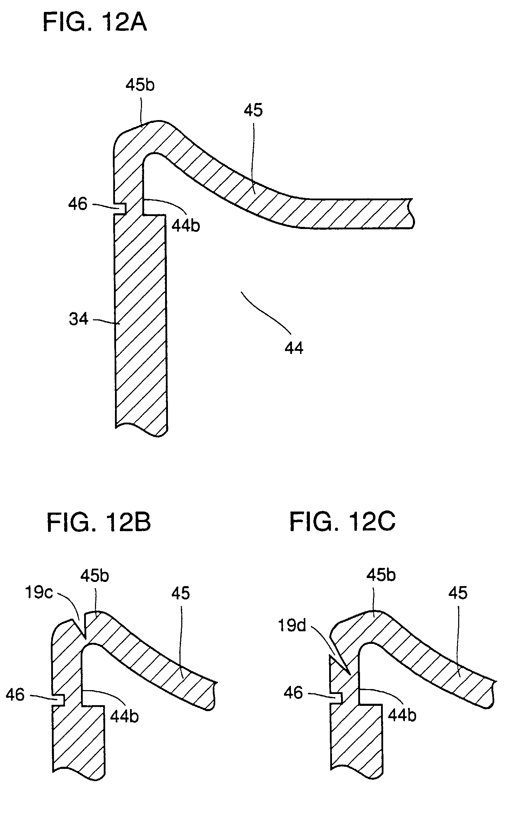

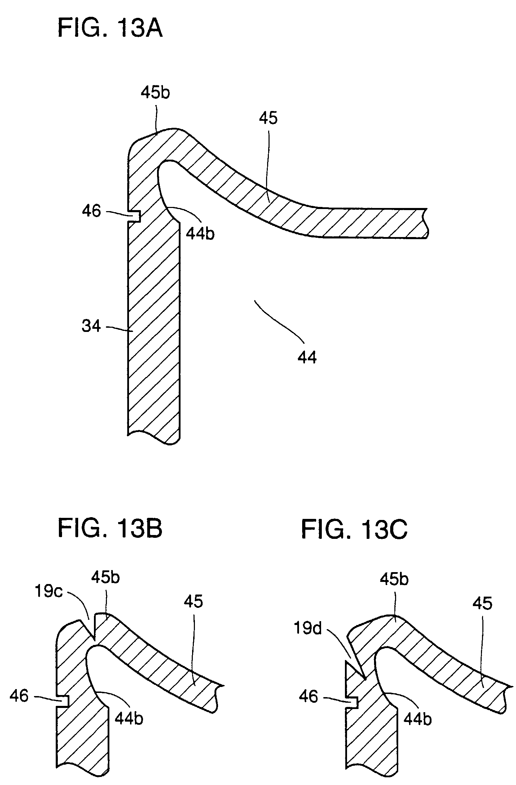

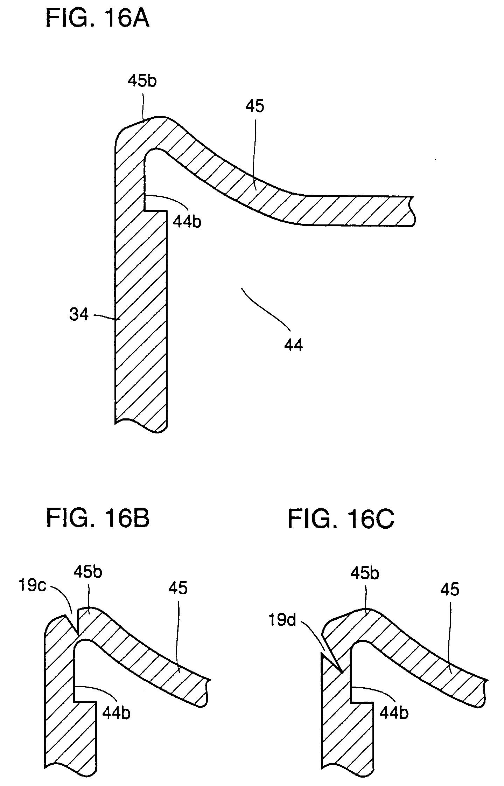

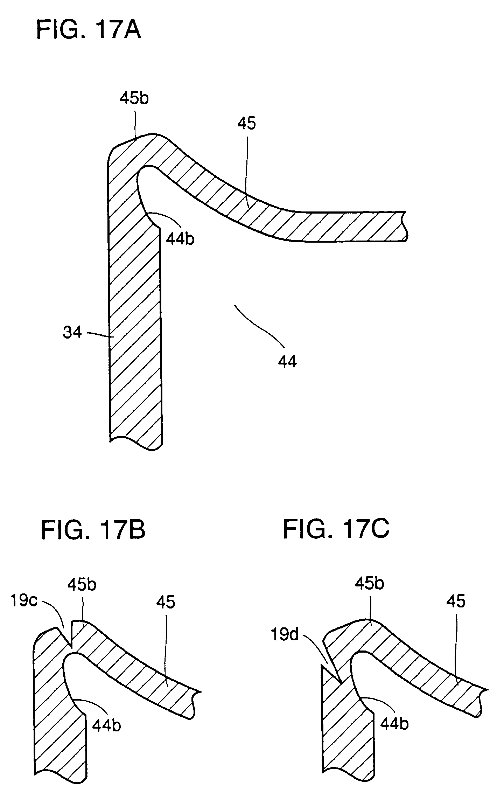

The shape of the connection region will be described with reference to Figs. 5 to 22. The shape shown here is only an example as described above. Essentially, any shape may be employed provided that when a pressing force is applied to a tip end surface of cap portion 45 in a direction from the side of cap portion 45 to flarable portion 34, a force is exerted to bend flarable portion 34 outward, so that cap portion 45 goes off from flarable portion 34 and flarable portion 34 is bent outward.

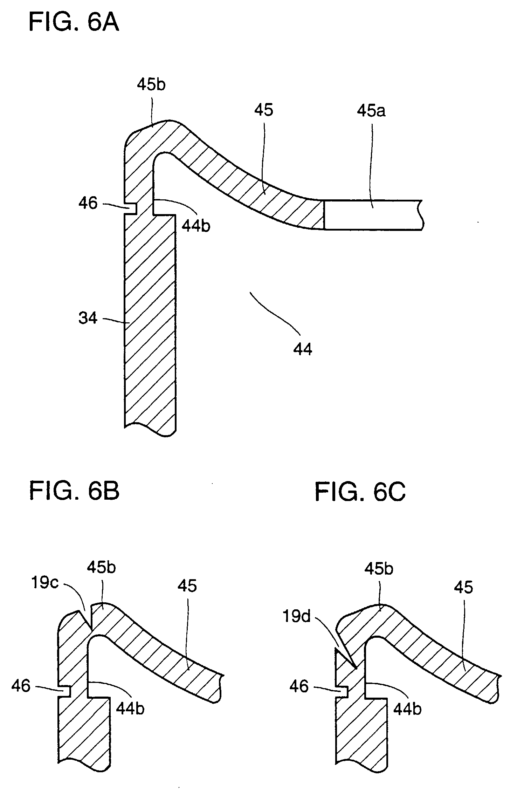

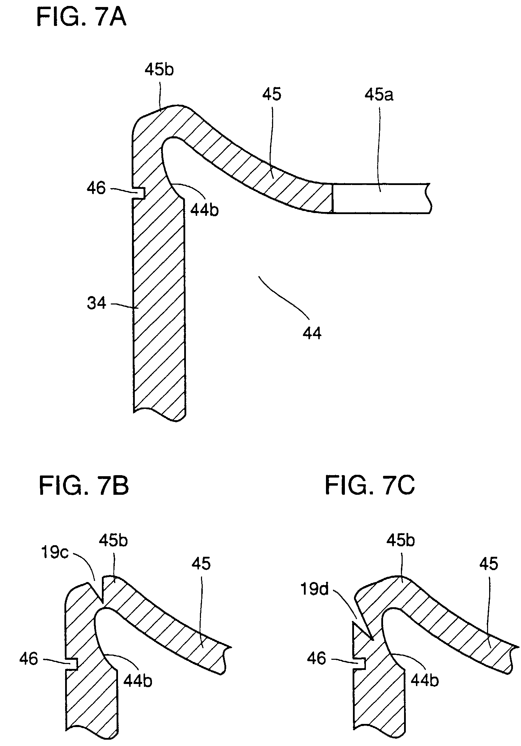

A shape such as shown in Fig. 5A in that inner surface 44 of flarable portion 34 has a tapered portion 44a with its thickness gradually made thinner toward cap portion 45, a shape such as shown in Fig. 6A in which a step portion 44b is provided, or a shape such as shown in Fig. 7A in that a curved surface 44b with its thickness gradually reduced may be employed. On an outer peripheral portion of cap portion 19 at the connecting region between flarable portion 34 and cap portion 19, an annular portion 19b protruding upward is provided.

Alternatively, as shown in Figs. 5B, 6B and 7B, a structure having a notch 19c with an outward oblique side formed at an upper end of the connecting region of cap portion 45, or alternatively, as shown in Figs. 5C, 6C and 7C, a structure having a notch 19d extending from an upper to lower portion as a side surface of the coupling region of cap portion 45 may be employed.

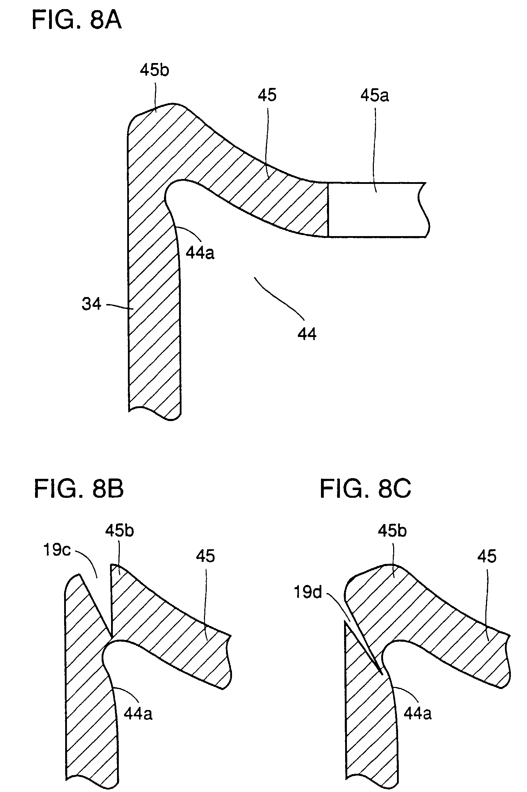

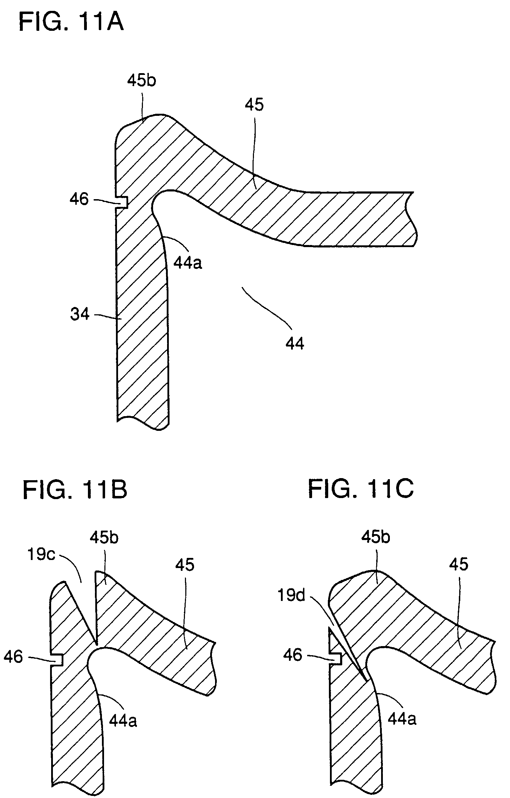

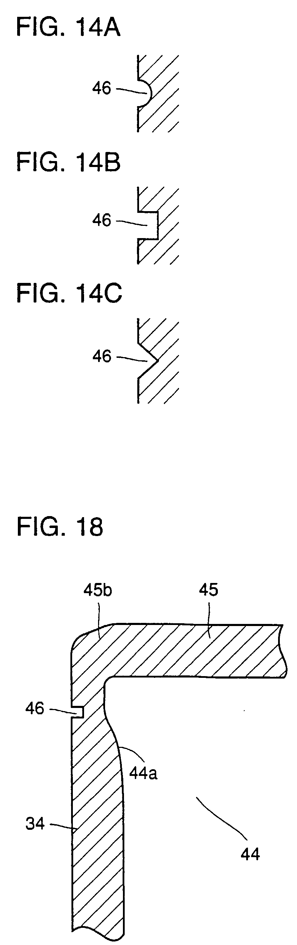

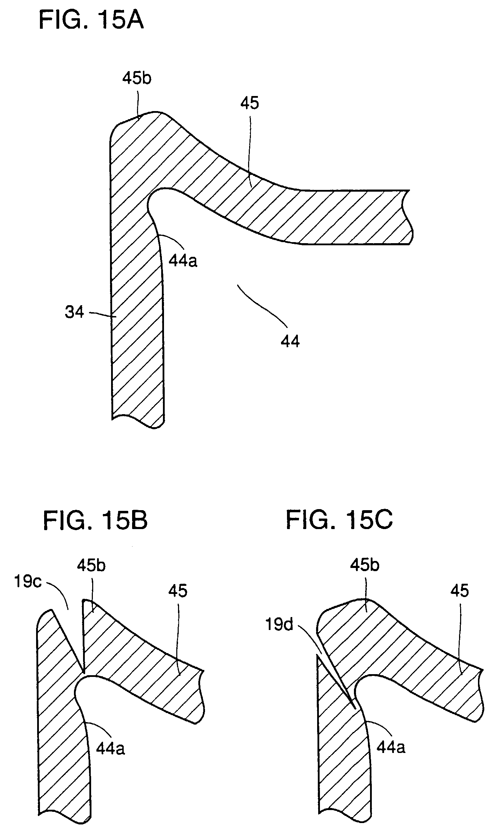

As modifications of the structures shown in Figs. 5 to 7, a structure not provided with the annular groove 46 shown in Figs. 8 to 10, a structure not provided with an opening 45a shown in Figs. 11 to 13, and the structure not provided with neither annular groove 46 nor opening 45a shown in Figs. 15 to 17 may be employed. Cross sectional shape of annular groove 46 may be arbitrarily selected, including a circular shape, a rectangular shape with one side opened or a V shape as shown in Figs. 14A, 14B and 14C, for example.

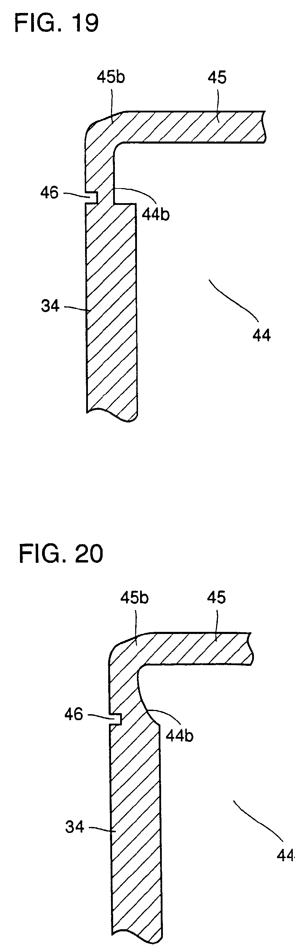

In the structures shown in Figs. 5 to 13 and 15 to 17, cap portion 45 has a dent at the central portion. Alternatively, cap portion 45 may have almost flat shape, as shown in Figs. 18 to 22. Fig. 18 shows a shape corresponding to Fig. 5, Fig. 19 corresponds to Fig. 6 and Fig. 20 corresponds to Fig. 7.

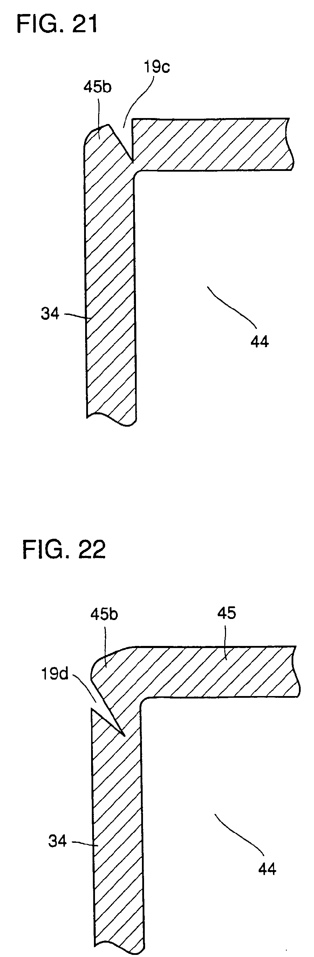

As to the shape of the connecting region, when the essence of the present invention only is to be implemented, a structure such as shown in Fig. 21 in that a notch 19c having an outward oblique side provided at an upper end portion of the connecting region of cap portion 45, or a structure such as shown in Fig. 22 in which a notch 19d extending from an upper to lower portion on a side surface of the connecting region of cap portion 45 may be employed.

### (Fifth Embodiment: Shape of T nut 61E)

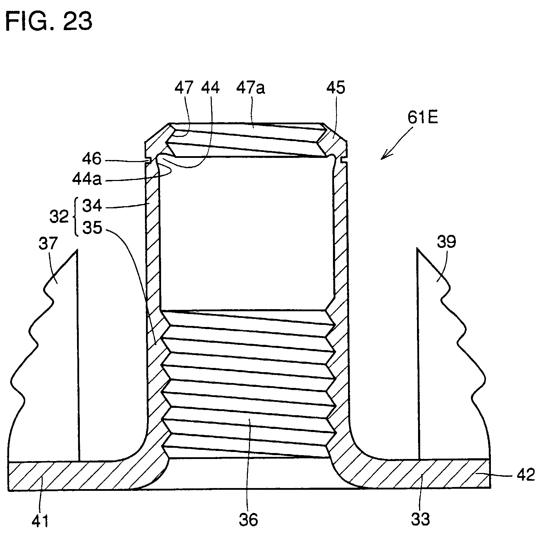

The shape of T nut 61E in accordance with the fifth embodiment of the present invention is basically the same as that of T nut 61A in accordance with the first embodiment, as can be seen from Fig. 23, except that a female screw 47a is provided on an end surface 47 of an opening 45a of cap portion 45.

Female screw 47a is a female screw in accordance with the same standard as female screw 36 formed simultaneously by a ball tap, a bent shank tap or the like. The female screw may be of different standard, or may be formed in a separate step.

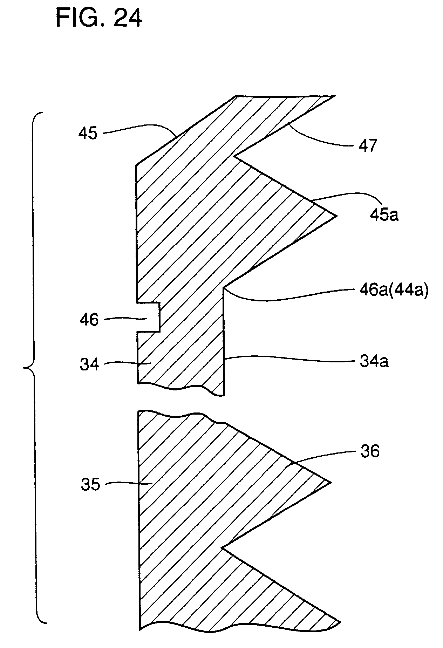

As can be seen from an enlarged cross section of Fig. 24, when the size of female screw 47a is large (for example, in case of an inch standard screw), it is possible that the position of the bottom of female screw 47a is almost equal to the inner surface 34a of flarable portion 34. In such a case, stress concentration is likely at an intersecting point 46a between the bottom of female screw 47a and inner surface 34a. Therefore, similar effects can be attained without the necessity of forming a special shape at the connecting region in advance.

Not only the structure shown in Figs. 23 and 24 but also structures shown in Figs. 5 to 22 may be applied to the shape of the connecting region.

### (Sixth Embodiment: Method of Driving T nut)

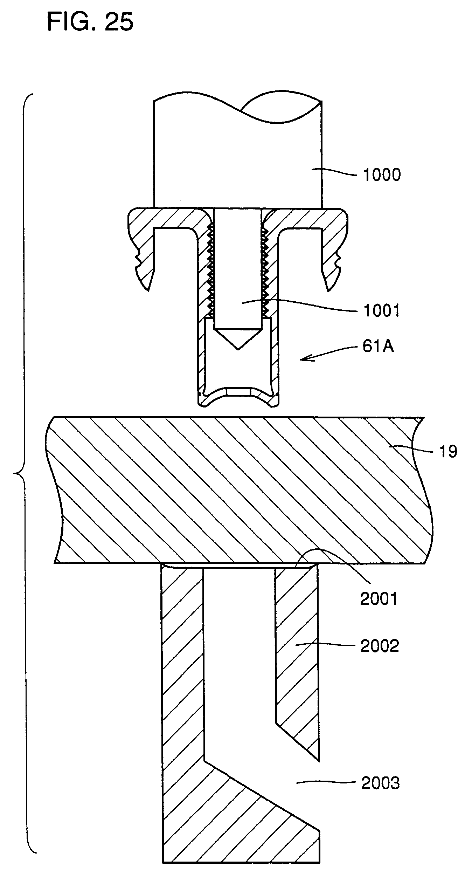

The method of driving T nuts 61A, 61B, 61C and 61D having the above described structures into an object 19 of fixing formed of resin or wood will be described with reference to Figs. 25 to 28, taking T nut 61A as an example. The method of driving T nuts 61B, 61C and 61D is the same as that of T nut 61A, and therefore, description thereof is not repeated.

T nut 61A in accordance with the present invention is held by a driving head 1000 as can be seen from Fig. 25, with a positioning shaft 1001 of driving head 1000 of a caulker inserted to the shaft 32 of T nut 61A. At a position opposite to driving head 1000 of the object 19 of fixing, an abutting member 2000 is arranged, provided on the caulker. The abutting member 2000 is provided with guide grooves 2002 and 2003 for externally discharging broken pieces of the fractured object 19. Further, a recessed portion 2001 for guiding flarable portion 34 when T nut 61A is driven is provided at the contact surface with the object 19.

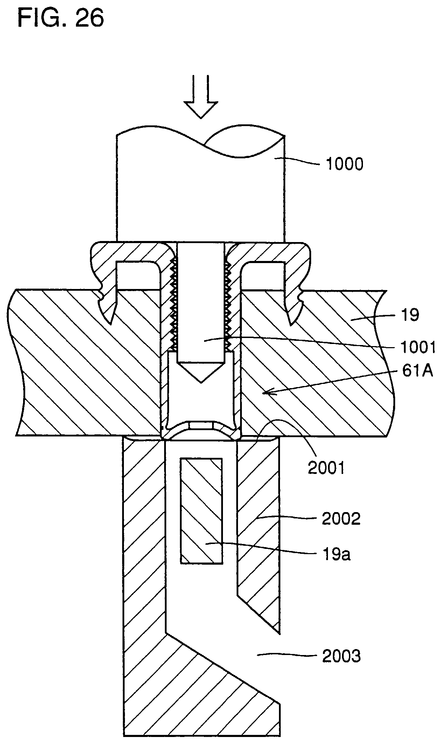

When T nut 61A is driven into object 19 of fixing by driving head 1000 in the above described state, cap portion 45 bites the object 19 of fixing as shown in Fig. 26, so that a piece of object 19 ejected by cap portion 45. The ejected broken piece 19a of the object of fixing is discharged externally by guide grooves 2002 and 2003. In this manner, when T nut 61A in accordance with the present embodiment is used, it is unnecessary to provide a receiving hole for driving T nut 61A in object 19 in advance.

Further, the connecting region between flarable portion 34 and cap portion 45 has such a shape in that when a pressing force is applied to the tip end surface of cap portion 45 in a direction from the side of cap portion 45 to flarable portion 34, a force is exerted to bend flarable portion 34 outward so that cap portion 45 goes off from flarable portion 34 and flarable portion 34 is bent outward by the force. Therefore, immediately after T nut 61A is driven into object 19, when cap portion 45 collides the recessed portion 2001 of abutting member 2000 provided outside, cap portion 45 is kept colliding against recessed portion 2001 of abutting member 2000, while an external force for caulking is applied to flarable portion 34 from driving head 1000.

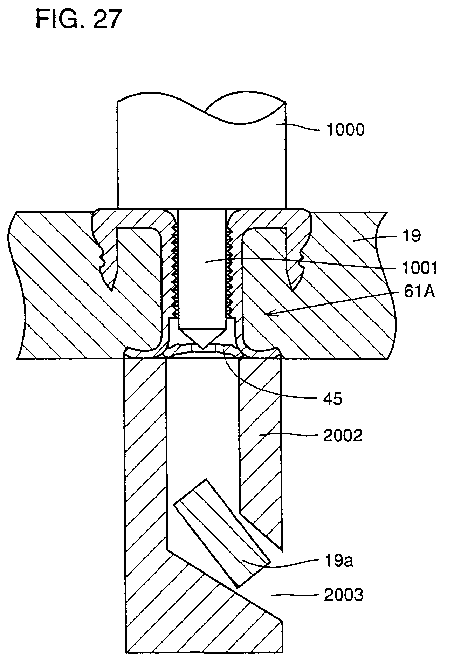

At this time, as the inner surface of flarable portion 34 has a tapered portion 44a recessed outward, the external force for caulking goes outward. As a result, cap portion 45 is torn off from flarable portion 34, so that flarable portion 34 is flared outward smooth, and caulking of flarable portion 34 is surely done as shown in Fig. 27. At the same time, pawls 37 and 39 are driven into the other surface of object 19 of fixing, so that T nut 61A is firmly fixed on object 19.

Though a groove 46 extending in the peripheral direction is provided on an outer peripheral surface of shaft portion 32 at the connecting region between flarable portion 34 and cap portion 45, the groove 46 is to facilitate tearing of cap portion 45 at the time of driving, and therefore it is not essential.

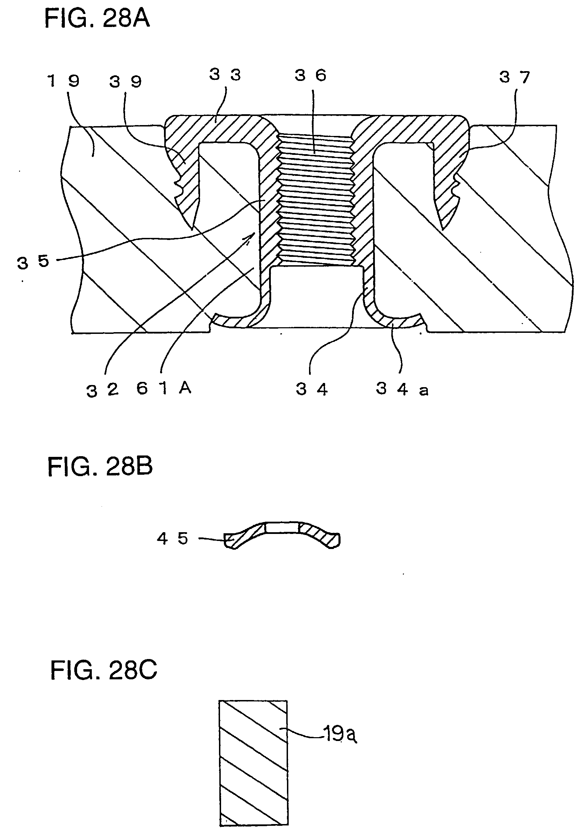

As described above, when T nut 61A is driven into object 19 of fixing, T nut 61A is driven into object 19 as shown in Fig. 28A, and torn cap portion 45 and broken piece 19a of the object remain as shown in Figs. 28B and 28C.

In a product in which object 19 of fixing is a component, another member can be joined to object 19 of fixing by screwing a male screw into the female screw of female screw forming portion 35, with T nut 61A is caulked and fixed. When the male screw is fastened to female screw at female screw forming portion 35, the fastening force of the male screw mainly acts as a compressive force on female screw forming portion 35. Therefore, large tensile stress is not generated on the shaft portion of the T nut. Therefore, even when strength is decreased because of the provision of annular groove at the shaft portion, substantial strength of fixing is not degraded.

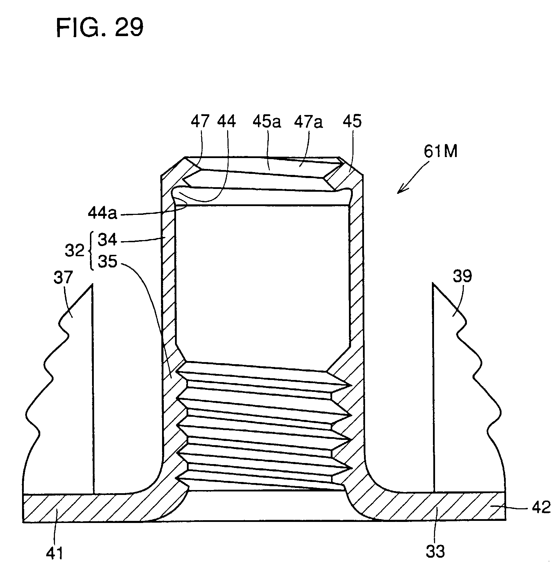

Though an annular groove 46 is provided on T nut 61E shown in Fig. 23, a structure not provided with the annular groove 46 such as the T nut 61M shown in Fig. 29 may be employed.

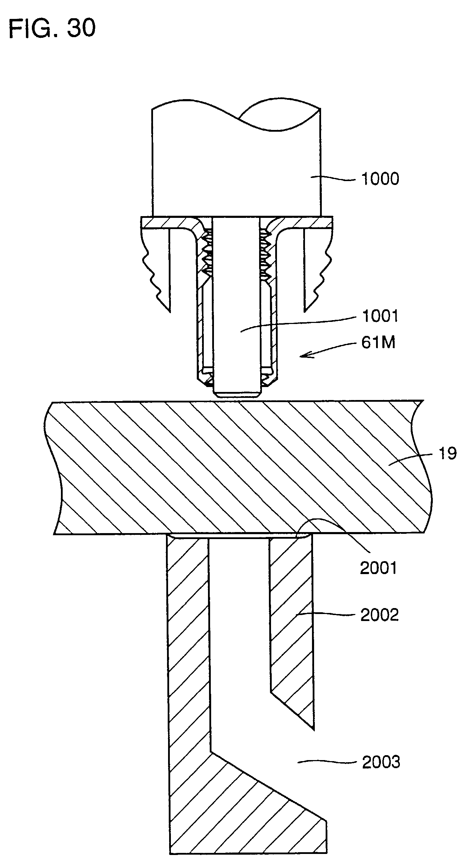

The method of driving T nut 61M having the above described structure into an object 19 of fixing formed of resin or wood will be described with reference to Figs. 30 to 33.

T nut 61M is held by a driving head 1000, as can be seen from Fig. 30, with a positioning shaft 1001 of driving head 1000 of a caulker inserted to the shaft 32 of T nut 61M. At a position opposite to driving head 1000 of the object 19 of fixing, an abutting member 2000 is arranged, provided on the caulker. The abutting member 2000 is provided with guide grooves 2002 and 2003 for externally discharging broken pieces of the fractured object 19. Further, a recessed portion 2001 for guiding flarable portion 34 when T nut 61M is driven is provided at the contact surface with the object 19.

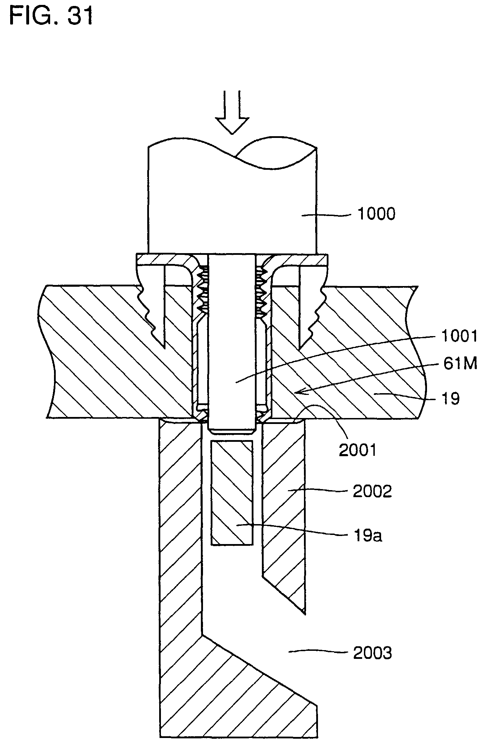

When T nut 61M is driven into object 19 of fixing by driving head 1000 in the above described state, cap portion 45 bites the object 19 of fixing as shown in Fig. 31, so that a piece of object 19 is ejected by cap portion 45. The ejected broken piece 19a of the object of fixing is discharged externally by guide grooves 2002 and 2003. In this manner, when T nut 61M is used, it is unnecessary to provide a receiving hole for driving T nut 61M in object 19 in advance.

Further, the connecting region between flarable portion 34 and cap portion 45 has such a shape in that when a pressing force is applied to the tip end surface of cap portion 45 in a direction from the side of cap portion 45 to flarable portion 34, a force is exerted to bend flarable portion 34 outward so that cap portion 45 goes off from flarable portion 34 and flarable portion34 is bent outward by the force. Therefore, immediately after T nut 61M is driven into object 19 of fixing, when cap portion 45 collides the recessed portion 2001 of abutting member 2000 provided outside, cap portion 45 is kept colliding against recessed portion 2001 of abutting member 2000, while an external force for caulking is applied to flarable portion 34 from driving head 1000.

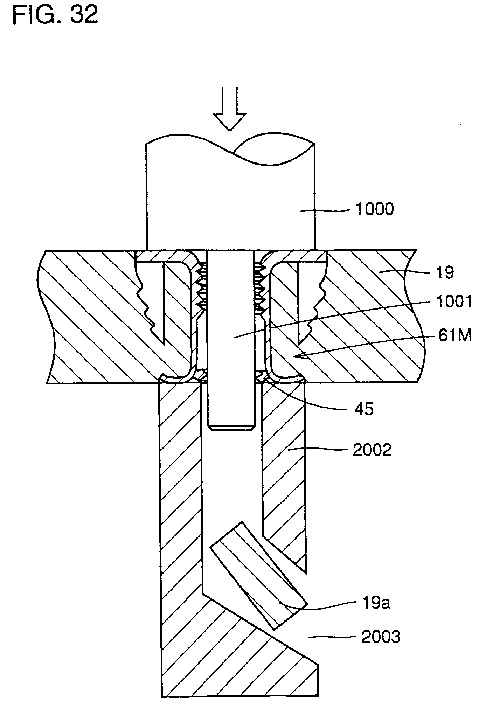

At this time, as the inner surface of flarable portion 34 has a tapered portion 44a recessed outward, the external force for caulking goes outward. As a result, cap portion 45 is torn off from flarable portion 34, so that flarable portion 34 is flared outward smooth, and caulking of flarable portion 34 is surely done as shown in Fig. 32. At the same time, pawls 37 and 39 are driven into the other surface of object 19 of fixing, so that T nut 61M is firmly fixed on object 19.

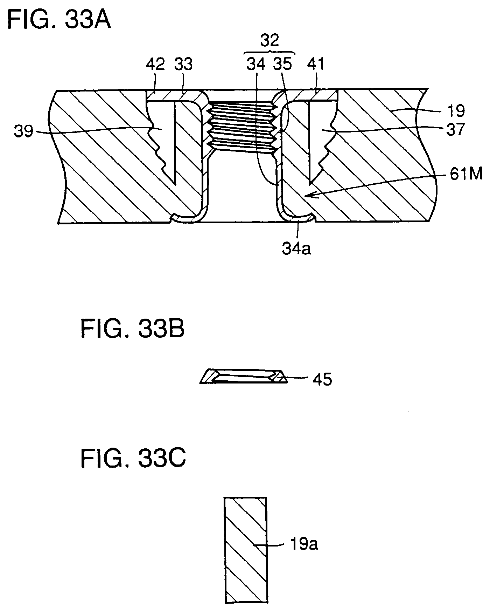

As described above, when T nut 61M is driven into object 19 of fixing, T nut 61M is driven into object 19 as shown in Fig. 33A, and torn cap portion 45 and broken piece 19a of the object remain as shown in Figs. 33B and 33C.

In a product in which object 19 of fixing is a component, another member can be joined to object 19 of fixing by screwing a male screw into the female screw of female screw forming portion 35, with T nut 61M caulked and fixed. When the male screw is fastened to female screw at female screw forming portion 35, the fastening force of the male screw mainly acts as a compressive force on female screw forming portion 35. Therefore, large tensile stress is not generated on the shaft portion of the T nut. Therefore, even when strength is decreased because of the provision of annular groove at the shaft portion, substantial strength of fixing is not degraded.

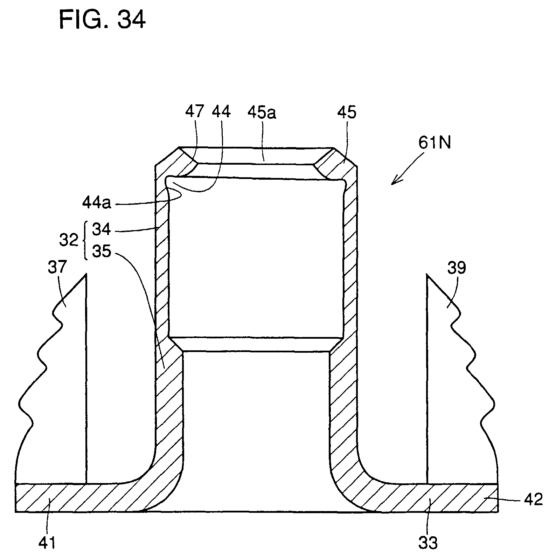

Further, as a T nut intended solely for caulking, a T nut 61N not having the female screw in the inner periphery of shaft portion 32 or on an end surface 47 of opening 45a, as shown in Fig. 34, may be employed.

The shape of an end surface 47 of T nut 61M shown in Fig. 29 is different from the shape of an end surface 47 of T nut 61E shown in Fig. 23. The reason for this is that in T nut 61M, thickness of end surface 47 is reduced, so as to reduce threading torque on end surface 47 generated when the female screw is formed.

### (Seventh Embodiment: Shape of Recycle T nut 61F)

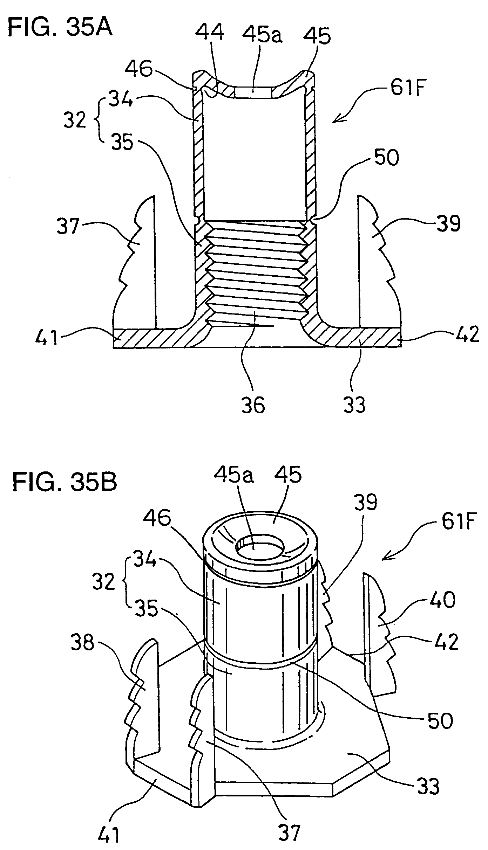

The shape of a T nut 61F in accordance with the seventh embodiment of the present invention is basically the same as T nut 61A in accordance with the first embodiment, as can be seen from Figs. 35A and 29B. Therefore, common components will be denoted by the same reference characters, and detailed description thereof will not be repeated.

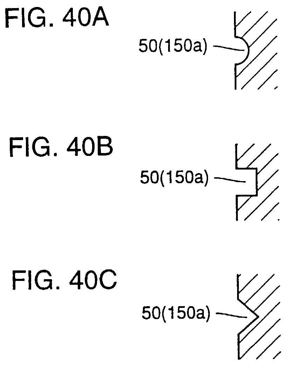

T nut 61F in accordance with the present embodiment differs from T nut 61A in accordance with the first embodiment described above in that an annular groove 50 is provided over the entire periphery of the outer periphery of shaft portion 32 at the interface between flarable portion 34 and female screw forming portion 35. Cross section of annular groove 50 may be arbitrarily selected to be U shape, V shape or a rectangular shape with one side opened as shown in Fig. 40, dependent on the material of the T nut and associated processing property or mechanical property such as tensile strength. Annular groove 50 is provided for the purpose of promoting recycling of object 19 of fixing, as it facilitates separation and recovery of the object which is the part of a product, after the product on which T nut 61F has been fixed by caulking is finished. The method of recovery for recycling will be described later.

### (Eighth Embodiment: Shape of Recycle T nut 61G)

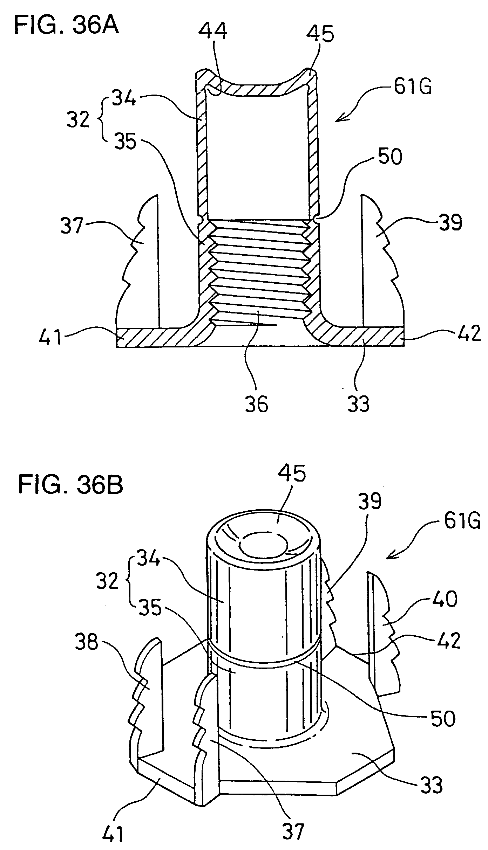

The shape of a T nut 61G in accordance with the eighth embodiment of the present invention is basically the same as T nut 61D in accordance with the fourth embodiment, as can be seen from Figs. 36A and 36B. Therefore, common components will be denoted by the same reference characters, and detailed description thereof will not be repeated.

T nut 61G in accordance with the present embodiment differs from T nut 61D in accordance with the fourth embodiment described above in that an annular groove 50 is provided over the entire periphery of the outer periphery of shaft portion 32 at the interface between flarable portion 34 and female screw forming portion 35. Cross section of annular groove 50 may be arbitrarily selected to be U shape, V shape or a rectangular shape with one side opened as shown in Fig. 40, dependent on the material of the T nut and associated processing property or mechanical property such as tensile strength. Annular groove 50 is provided for the purpose of promoting recycling of object 19 of fixing, as it facilitates separation and recovery of the object which is the part of a product, after the product on which T nut 61G has been fixed by caulking is finished. The method of recovery for recycling will be described later.

The structure for the purpose of recycling is also applicable to T nut 61B in accordance with the second embodiment and to T nut 61C in accordance with the third embodiment.

### (Ninth Embodiment: Method of Recovering Object of Fixing)

The method of recycling when recycle T nuts 61F and 61G in accordance with the seventh and eighth embodiments are used will be described, taking recycle T nut 61F as an example. T nut 61G can be recycled in the similar manner.

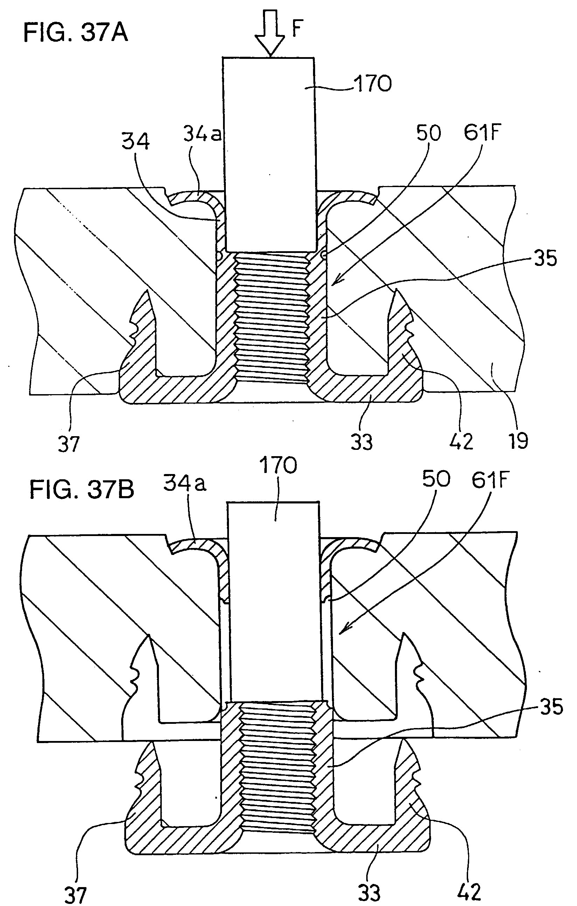

First, referring to Fig. 37A, a lower end of a columner jig 170 having slightly larger outer shape than the inner diameter of flarable portion 34 before caulking is pressed in from the side of flarable portion 34a of T nut 61G. With the lower end of jig 170 abutting a stepped portion at the boundary between flarable portion 34 and female screw forming portion 35, an upper end of jig 170 is hit by a hammer or the like, so that a force F shown in Fig. 37A is generated.

By the force F, a portion having the smallest thickness at the outer periphery of the shaft portion provided with the annular groove 50 at the interface between flarable portion 34 and female screw forming portion 35, stress is concentrated, resulting in large tensile stress.

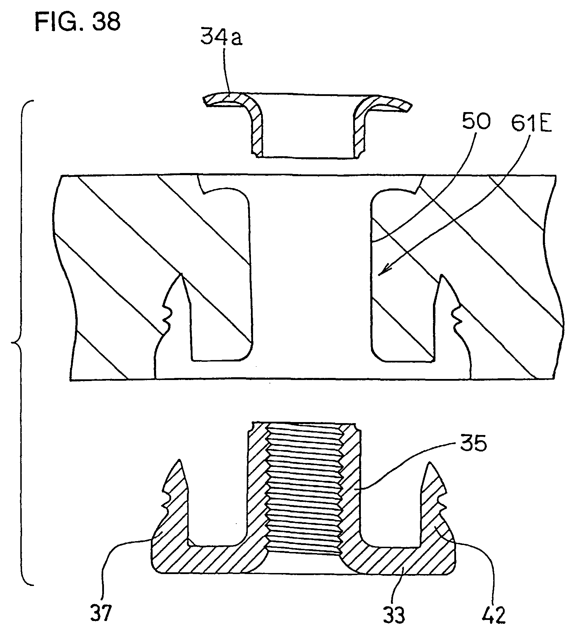

As a result, annular groove 50 is torn, so that T nut 61F is divided into two as shown in Fig. 37B. By the lower end of jig 170, lower half of T nut 61D including female screw forming portion 35 and flange portion 33 is pushed downward, and removed from object 19 of fixing. As a result, referring to Fig. 38, the upper half of T nut 61F including the caulked portion 34a is removed from the through hole of object 19 of fixing, fitted in jib 170, when the jig 170 is pulled upward.

In this manner, recycle T nuts 61F and 61G in accordance with the seventh and eighth embodiments allow easy removal from object 19 of fixing. Therefore, when the product on which the T nut has been caulked and fixed is used and finished, the object of fixing constituting the product can be easily separated and recovered. Therefore, recycling of object 19 of fixing is promoted.

In T nuts 61F and 61G in accordance with the seventh and eighth embodiments, annular groove 50 is provided at the interface between flarable portion 34 and female screw forming portion 35. Therefore, even when the flarable portion 34 is subjected to caulking over almost entire length, the method of removal using jig 170 described above is applicable.

Further, as the portion of minimum thickness is formed at the step at the interface between the flarable portion and the female screw forming portion, stress concentration at that portion becomes higher, relatively facilitating tearing at the time of removal from the object. Therefore, conveniently, the process of separation at the time of recovery for recycle is facilitated. Such recovery for recycling is strongly desired when object 19 of fixing is formed of plastics.

### (Tenth Embodiment)

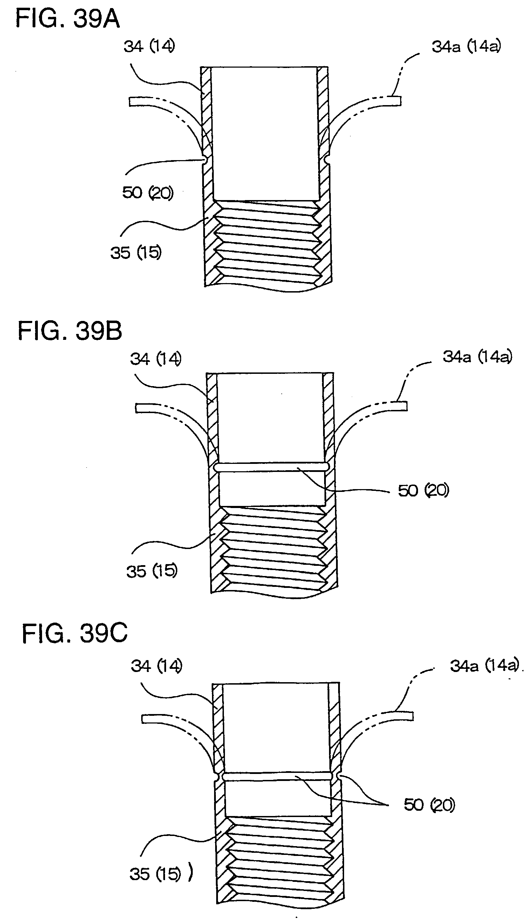

In recycle T nuts 61G and 61F in accordance with the seventh and eighth embodiments, annular groove 50 is provided on an outer periphery of shaft portion 32 near the interface between flarable portion 34 and female screw forming portion 35. The position where annular groove 50 is provided is not limited thereto. More specifically, as represented by two dotted line in Figs. 39A to 39C, when only a part of the opening side of flarable portion 34 is to be bent by caulking, annular groove 50 may be provided closer to the side of flarable portion 34 than the interface between flarable portion 34 and female screw forming portion 35. Even when the annular groove is provided at such a position, removal from object 19 of fixing is possible by the method described with reference to Figs. 37 and 38.

Further, when the annular groove is to be provided on flarable portion 34, the groove may be formed not on the outer periphery of shaft portion 32 but on an inner periphery of shaft portion 32 as shown in Fig. 39B, or grooves may be provided both on the inner and outer peripheries of shaft portion 32 as shown in Fig. 39C, attain similar effects.

The shape of annular groove 50 may be arbitrarily selected to be U shape, V shape or a rectangular shape with one side opened as shown in Figs. 40A, 40B and 40C, in accordance with the material of the T nut and associated processing property or mechanical property such as tensile strength. The same applies to the following embodiments.

### (Eleventh Embodiment: Modification of Recycle T nut)

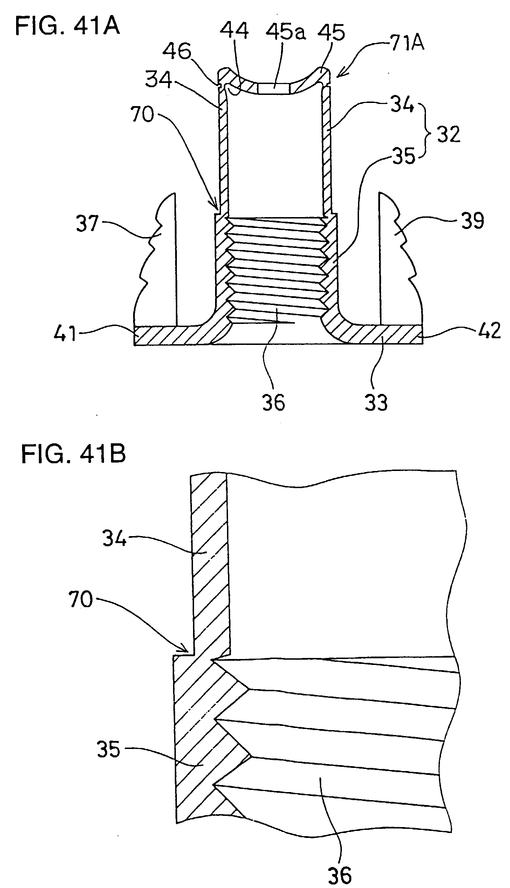

In each of the above described embodiments, annular groove 50 is formed on the shaft portion 32 so as to form an annular thin portion partially for the purpose of recycling. As means for forming annular thin portion, it is possible to contract to reduce inner and outer diameters of flarable portion 34 as shown in Figs. 41A and 41B, whereby a T nut 71A is provided which has an annular thin portion 70 extending over the entire periphery at the interface between flarable portion 34 and female screw forming portion 35.

T nut 71A having such a structure caulked and fixed on the object of fixing can also be divided into two and removed from the object of fixing, by driving a wedge shaped jig or the like into the contact portion between the caulked portion or the flange portion and the object of fixing, causing tensile stress at the shaft portion and tearing the annular thin portion.

In the structure shown in Fig. 41, the inner and outer diameters of flarable portion 34 are contracted to be reduced and extended in the radial direction of shaft portion 32. Alternatively, the inner and outer diameters of flarable portion 34 may be formed to be enlarged and drawn in the radial direction of shaft portion 32 to form the annular thin portion to attain similar object. More specifically, what is necessary is to form the inner and outer diameters of flarable portion 34 reduced or enlarged relative to the female screw forming portion 35 so that an annular thin portion drawn in the radial direction of shaft portion 32 is formed over the entire periphery of the interface between flarable portion 34 and female screw forming portion 35.

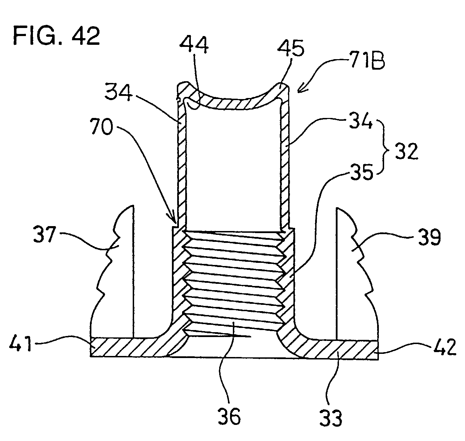

Fig. 42 shows a T nut 71B as a modification of T nut 71A. T nut 71B is different in that cap portion 44 does not have opening 45a and flarable portion 34 is not provided with groove 46. Except these points, the structure and function are the same.

Though T nuts 71A and 71B shown in Figs. 41 and 42 have approximately octagonal relatively large flanges with pawls provided on the outer periphery of the flange, the flange is not limited to the relatively large sized ones, and pawls may not be provided. Further, circular flange may be used. Driving into the object of fixing is performed in the similar manner as described with reference to Figs. 25 to 28 and Figs. 30 to 33

As to the shape of the connecting region, not only the structure shown in Figs. 41 and 42 but also the structure shown in Figs. 5 to 24 and Fig. 29 may be applicable.

As to the position and cross sectional shape of annular groove 50, the structure shown in Figs. 39 and 40 may be employed.

### (Twelfth Embodiment: Modification of Recycle T nut)

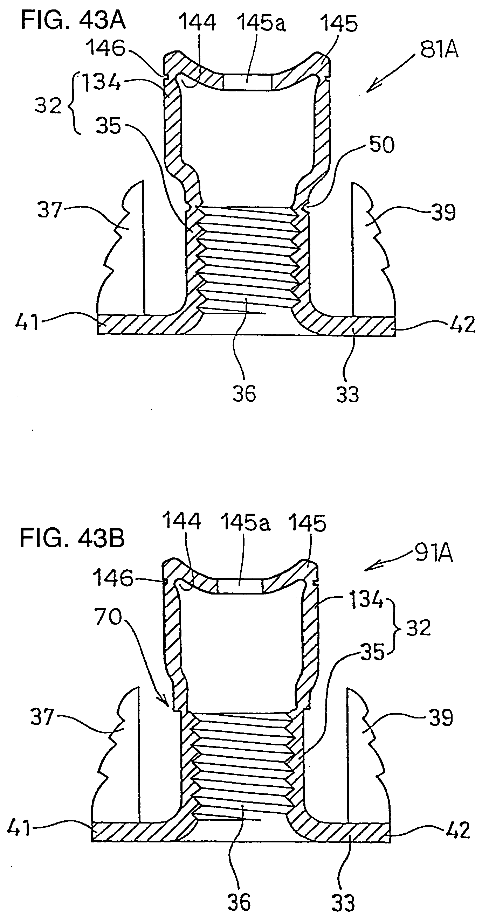

A structure of T nut 81A in accordance with the twelfth embodiment of the present invention will be described with reference to Fig. 43A. In Fig. 43A, portions which are the same as or correspond to those of T nut 61A in accordance with the first embodiment shown in Fig. 1 will be denoted by the same reference characters, and description thereof will not be repeated.

In the present embodiment, the present invention is applied to the T nut disclosed in United States Patent No. 5,618,144. T nut 81A in accordance with the present embodiment is common to the T nuts of the embodiments described above in that it is a so called rivet type T nut. The T nut of the present embodiment, however, is different from other embodiments in the shape of the flarable portion. More specifically, as can be seen from Fig. 43A, flarable portion 134 of shaft portion 32 of T nut 81A in accordance with the present invention has an inner diameter larger than the inner diameter of female screw forming portion 35 and an outer diameter larger than the outer diameter of female screw forming portion 35.

On the outer periphery of shaft portion 32 near the interface between flarable portion 134 and female screw forming portion 35, a cap member 145 having an opening 145a, an inner surface 144 provided recessed outward, a groove 146 and an annular groove 50 are formed, as in the ninth embodiment. The purpose, specific shapes and the method of removal for recycling of opening 145a, cap member 145, inner surface 144, groove 146 and annular groove 50 are similar to those described with respect to the first embodiment.

Fig. 43B represents a structure of T nut 91A in accordance with a modification of the present embodiment. T nut 91A of the modification is common to T nut 81A shown in Fig. 43A in that flarable portion 134 of shaft portion 32 has an inner diameter larger than the inner diameter of female screw forming portion 35 and an outer diameter larger than the outer diameter of female screw forming portion 35. T nut 91A differs from T nut 81A in that in place of annular groove 50, an annular thin portion 70 similar to that of the first embodiment described above is provided on the outer periphery of shaft portion 32 near the interface between flarable portion 134 and female screw forming portion 35.

Annular thin portion 70 of T nut 91A can be formed by drawing and enlarging in the radial direction of shaft 32 so that inner and outer diameters of flarable portion 34 are enlarged. The function attained by the provision of annular thin portion 70 is similar to that attained by the annular thin portion 70 of T nut 71 described with respect to the eleventh embodiment.

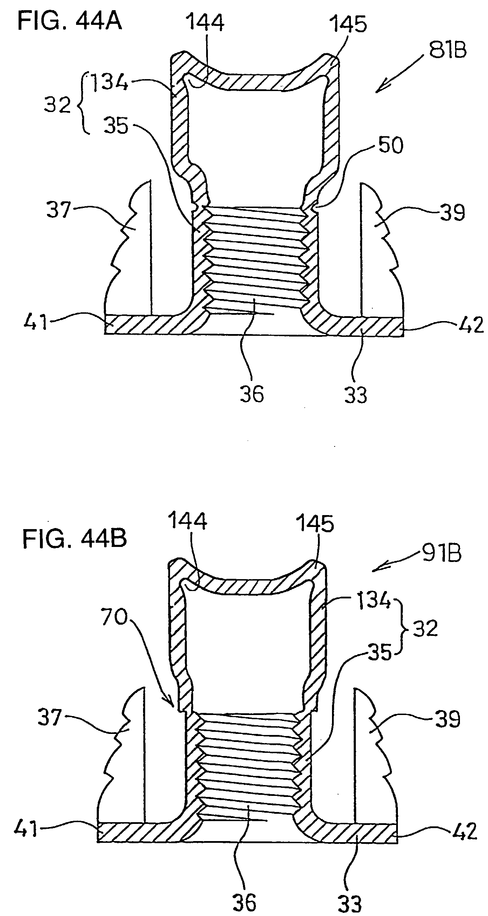

T nuts 81B and 91B shown in Figs. 44A and 44B are further modifications of T nuts 81A and 91A. T nuts 81B and 91B are different in that cap portion 144 does not have opening 145a and that flarable portion 134 is not provided with groove 146. Other structure and function are the same. If recycling is not intended, annular groove 50 and thin portion 70 are unnecessary.

Though T nuts shown in Figs. 43 and 44 have approximately octagonal relatively large flanges with pawls provided on the outer periphery of the flange, the flange is not limited to the relatively large sized ones, and pawls may not be provided. Further, circular flange may be used. Driving into the object of fixing is performed in the similar manner as described with reference to Figs. 25 to 28 and Figs. 30 to 33. As to the shape of the connecting region, not only the structure shown in Figs. 43 and 44 but also the structure shown in Figs. 5 to 24 and Fig. 29 may be applicable.

In the first to twelfth embodiments described above, examples in which the present invention is applied to a T nut having a female screw formed on an inner peripheral surface of the shaft portion have been described. In any of the embodiments, the structure may be used as a rivet, with the female screw not formed on the inner periphery of the shaft body portion, except for the flarable portion.

As to the position and cross sectional shape of annular groove 50, the structure shown in Figs. 39 and 40 may be employed.

### (Thirteenth Embodiment: Modification of Recycle T nut)

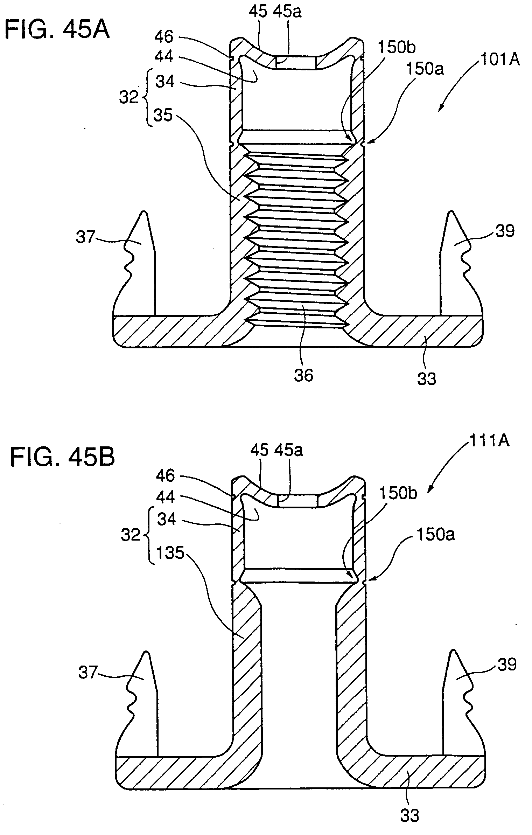

The structure of a T nut 101A in accordance with the thirteenth embodiment of the present invention will be described with reference to Fig. 45A. In T nut 101A of the present embodiment, the shapes of shaft portion 32 and flange portion 33 are basically the same as those of T nut 61A in accordance with the first embodiment, as can be seen from Fig. 45A. Therefore, in Fig. 45A, portions the same as or corresponding to those of T nut 61A in accordance with the first embodiment described above will be denoted by the same reference characters as Fig. 1A, and description thereof will not be repeated.

T nut 101A in accordance with the present embodiment differs from T nut 61A in accordance with the first embodiment in that in addition to an annular groove 150a provided on an outer periphery of shaft portion 32, an annular groove 150b having an approximately V shape having larger cross sectional area than annular groove 150b is provided on an inner periphery of shaft portion 32 at a position approximately opposing to annular groove 150a. Annular groove 150 is formed at the interface between flarable portion 34 and female screw forming portion 35, and at a position where annular grooves 150a and 150b oppose to each other, shaft 32 has the thinnest thickness. Therefore, when the T nut is to be moved from a panel material in accordance with the methods shown in Figs. 37A, 37B and 38 from the state fixed and caulked in a receiving hole of the panel material, shaft portion 32 tears at the thinnest portion and separated, so that recovery is easy.

Fig. 45B shows a cross section of a rivet 111A having similar structure as T nut 101A except that female screw is not formed on the inner peripheral surface of shaft body portion 135 which corresponds to the female screw forming portion 35 of T nut 101A. Rivet 111A may be used as a reinforced hole to which a bolt is to be inserted, when a plurality of panel materials are stacked and fastened by a bolt. Rivet 111A having such a structure is used caulked and fixed in the panel material in the similar manner as T nut 101A, and for removal, it is torn off in the similar manner as shown in Figs. 37A, 37B and 38, for easy recovery.

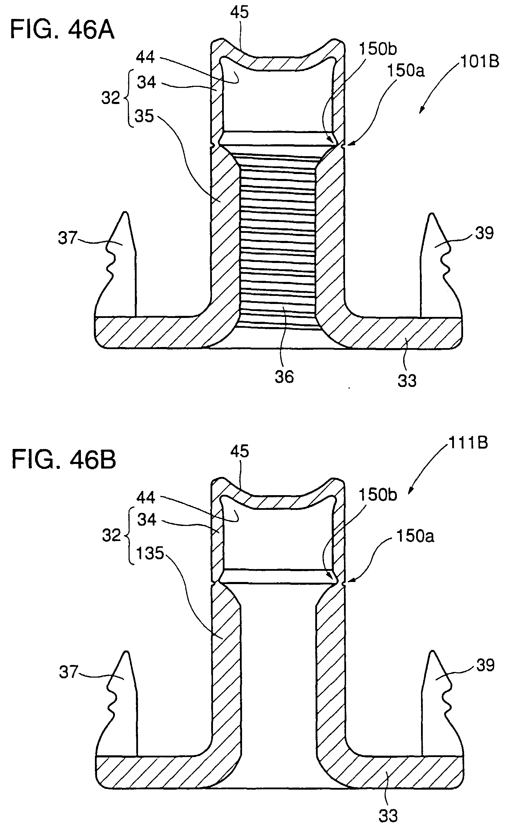

Figs. 46A and 46B show T nuts 101B and 111B which are further modifications of T nuts 101A and 111A. T nuts 101B and 111B are different in that cap portion 144 does not have opening 145a and that flarable portion 134 is not provided with groove 146. Except these points, the structure and function are the same. If recycle is not intended, annular groove 150a is unnecessary.

Though T nut and rivet shown in Figs. 45 and 46 have approximately octagonal relatively large flanges with pawls provided on the outer periphery of the flange, the flange is not limited to the relatively large size ones, and pawls may not be provided. Further, circular flange may be used.

As to the shape of the connecting region, not only the structure shown in Figs. 45 and 46 but also the structure shown in Figs. 5 to 24 and Fig. 29 may be applicable. Driving into the object of fixing is performed in the similar manner as described with reference to Figs. 25 to 28 and Figs. 30 to 33.

As to the position and cross sectional shape of annular groove 150a, the structure shown in Figs. 39 and 40 may be employed.

### (Fourteenth Embodiment: Modification of Recycle T nut)

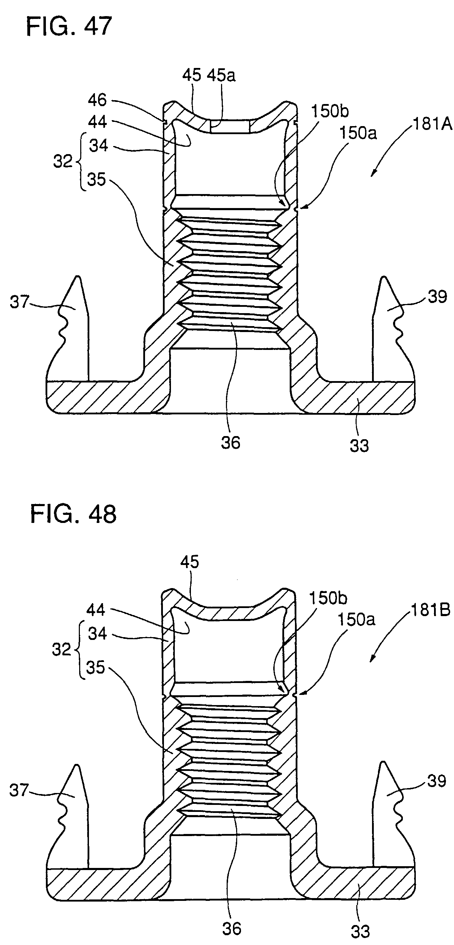

The structure of T nut 181A in accordance with the fourteenth embodiment of the present invention will be described with reference to Fig. 47. As shown in Fig. 47, T nut 181A in accordance with the present invention is similar in shape to T nut 101A in accordance with the thirteenth embodiment described with reference to Fig. 47A. Therefore, common components will be denoted by the same reference characters and detailed description thereof will not be repeated.

T nut 181A in accordance with the present embodiment differs from T nut 101A of the above described embodiment in that on the side of flange 33 of female screw forming portion 35 of shaft portion 32, a region is provided which has an inner diameter larger than the inner diameter of flarable portion 34 and an outer diameter larger than the outer diameter of shaft body portion 35.

The T nut having such a structure also attains the similar effects as T nut 101 attained by the provision of annular grooves 150a and 150b at the hollow cylindrical portion 104 at the side of the tip end of shaft portion 32.

Fig. 48 shows a T nut 181B which is a further modification of T nut 181A. T nut 181A is different in that cap portion 44 does not have opening 45a and that flarable portion 34 is not provided with groove 46. Except these points, the structure and function are the same. If recycle is not intended, annular groove 150a is unnecessary.

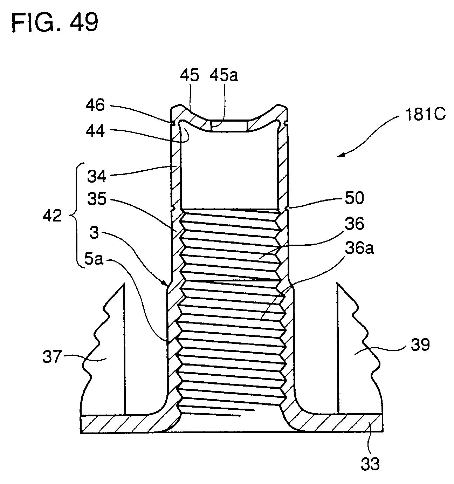

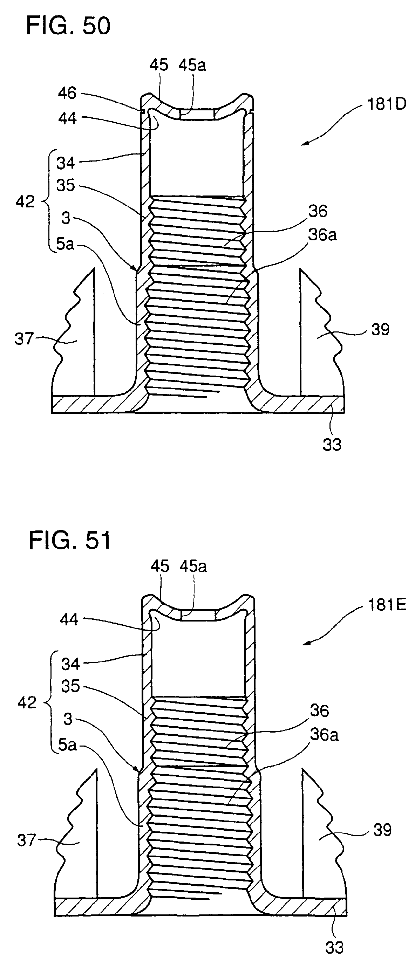

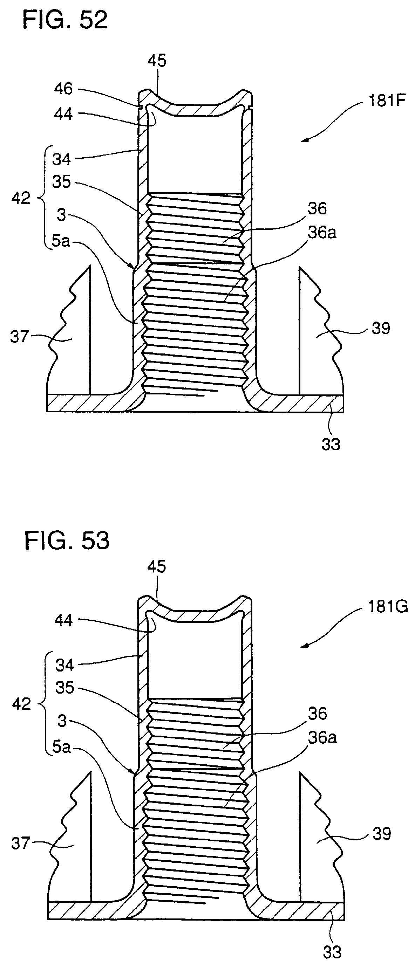

Figs. 49 to 53 show T nuts 181C to 181G, as further modifications of T nut 181A. T nut 181C is different from T nut 181A in that female screw 36a is formed additionally on an inner periphery of hollow cylindrical portion 5a on the side of flange 33 and that 150b is not provided. Other structure and function are the same.

T nut 181D is different from T nut 181C in that annular groove 50 is not provided, and other structure and function are the same. T nut 181E is different from T nut 181D in that groove 46 is not provided, and other structure and function are the same.

T nut 181F is different from T nut 181C in that annular groove 50 and opening 45a are not provided, and other structure and function are the same. T nut 181G is different from T nut 181F in that groove 46 is not provided, and other structure and function are the same.

Though T nuts 181A to 181G have approximately octagonal relatively large flanges with pawls provided on the outer periphery of the flange, the flange is not limited to the relatively large sized ones, and pawls may not be provided. Further, circular flange may be used. It is also applicable to a rivet not provided with the female screw.

As to the shape of the connecting region, not only the structure shown in Figs. 47 to 53 but also the structure shown in Figs. 5 to 24 and Fig. 29 may be applicable. Driving into the object of fixing is performed in the similar manner as described with reference to Figs. 25 to 28 and Figs. 30 to 33.

As to the position and cross sectional shape of annular groove 150a, the structure shown in Figs. 39 and 40 may be employed.

### (Fifteenth Embodiment: Modification of T nut)

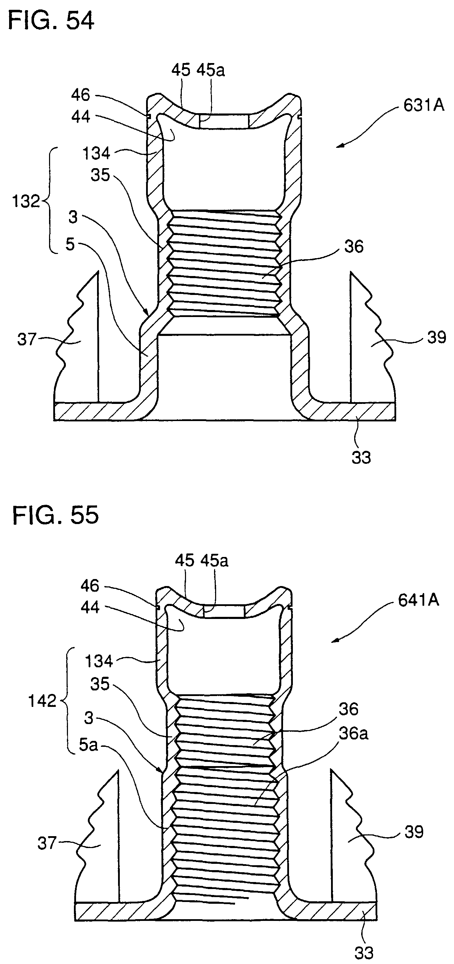

The structure of T nut 631A in accordance with the fifteenth embodiment of the present invention will be described with reference to Fig. 54. In the figure, components similar to those of T nut 81A in accordance with the twelfth embodiment will be denoted by the same reference characters and description thereof will not be repeated.

In the present embodiment, the present invention is applied to a T nut described in United States Patent No. 5,618,144. T nut 631A in accordance with the present embodiment is common to the T nuts in accordance with the embodiments described above in that it is a so called rivet type T nut, and most of the structure is similar to that of T nut 81A in accordance with the twelfth embodiment. Therefore, common components will be denoted by the same reference characters as T nut 81A, and detailed description thereof will not be repeated.

T nut 631A in accordance with the present embodiment differs from T nut 81A in that a step 3 having an inner diameter larger than the inner diameter of female screw forming portion 35 and an outer diameter larger than the outer diameter of female screw forming portion 35 is provided on the side of flange 33 of shaft 132.

As can be seen from Fig. 55, the present embodiment is also applicable to a T nut 641A in which female screw 36a is formed additionally on the inner periphery of hollow cylindrical portion 5a on the side of the flange, except for the flarable portion 134 of shaft portion 142.

Further, a portion continuous to flange portion 33 at a lower end of the inner periphery of hollow cylindrical portion 5a on the side of the proximal end of T nut 641A shown in Fig. 55 may be made approximately right angle, and the female screw may be formed up to the lower end of the inner periphery of hollow cylindrical portion 5a on the side of the proximal end.

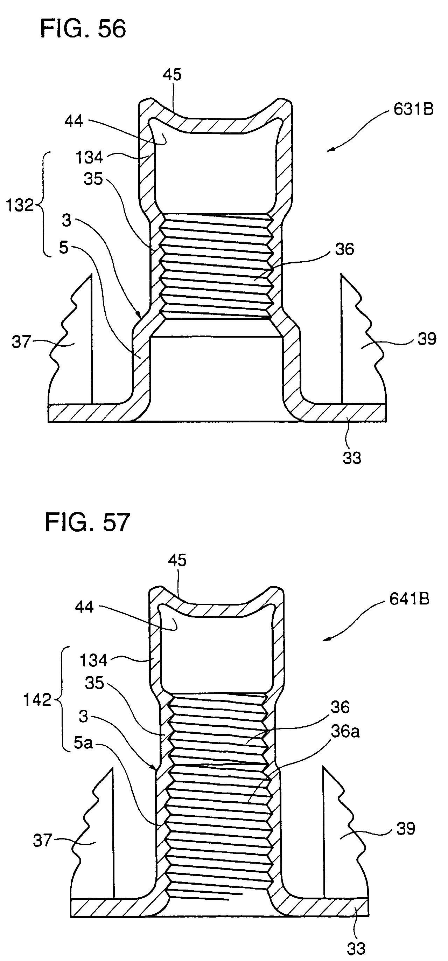

Figs. 56 and 57 show T nuts 631B and 641B as modifications of T nuts 631A and 641A. T nuts 631B and 641B are different in that cap portion 44 does not have opening 45a and that flarable portion 34 is not provided with groove 46, and other structure and function are the same.

Though T nuts 631A, 641A, 631B and 641B have approximately octagonal relatively large flanges with pawls provided on the outer periphery of the flange, the flange is not limited to the relatively large sized ones, and pawls may not be provided. Further, circular flange may be used.

As to the shape of the connecting region, not only the structure shown in Figs. 54 to 57 but also the structure shown in Figs. 5 to 24 and Fig. 29 may be applicable. Driving into the object of fixing is performed in the similar manner as described with reference to Figs. 25 to 28 and Figs. 30 to 33.

As to the position and cross sectional shape of annular groove 50, the structure shown in Figs. 39 and 40 may be employed.

### (Sixteenth Embodiment: Modification of T nut)

Examples of T nuts or rivets having an approximately octagonal or circular relatively large flange with pawls provided on the outer periphery of the flange have been described in the embodiments above. The flange is not limited to the relatively large ones, and pawls may not be provided.

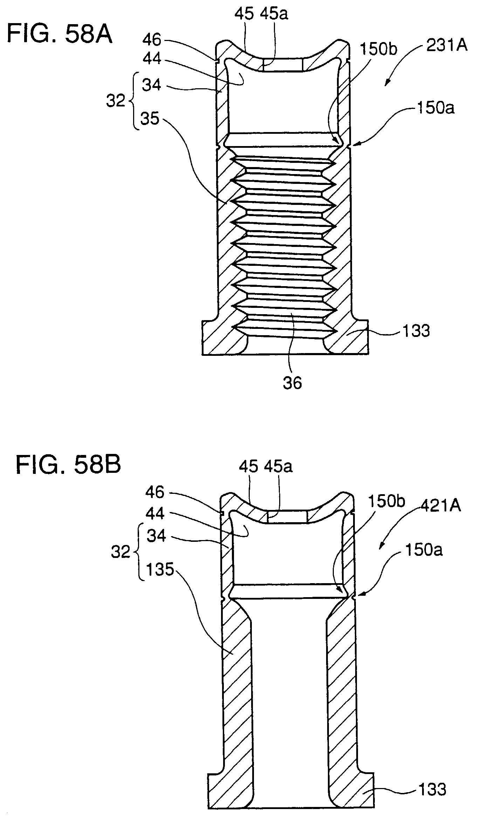

More specifically, the concept similar to each of the above described embodiments is applicable to a structure having a relatively small flange 133 with outer diameter slightly larger than shaft portion 32, such as T nut 231A shown in Fig. 58A or a rivet 421A shown in Fig. 58B. In Figs. 58A and 58B, components common to T nut 101A or rivet 111A shown in Figs. 39A and 39B are denoted by the same reference characters and detailed description thereof is not repeated.

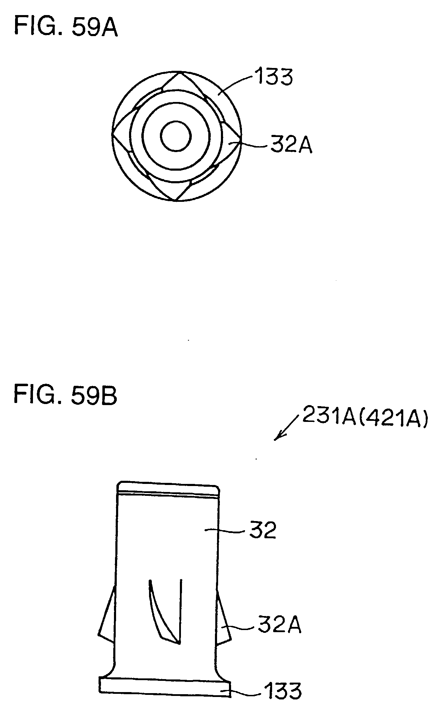

As a rotation stopper of T nut 231A and rivet 421A, a screw member 32A as a protruding portion extending outward from the outer peripheral surface of shaft 32 may be provided, as shown in Figs. 59A and 59B. Any shape may be employed provided that the function and effect of a rotation stopper are attained, other than screw member 32A.

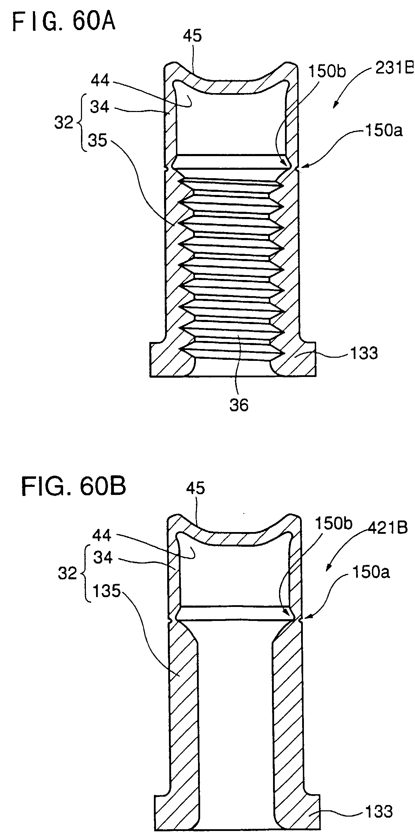

Figs. 60A and 60B show T nut 231B and rivet 421B which are further modifications of T nut 231A and rivet 421A. T nut 231B and rivet 421B are different in that cap portion 44 does not have opening 45a and that flarable portion 34 is not provided with groove 46. Except these points, the structure and function are the same. If recycle is not intended, annular groove 150a is unnecessary.

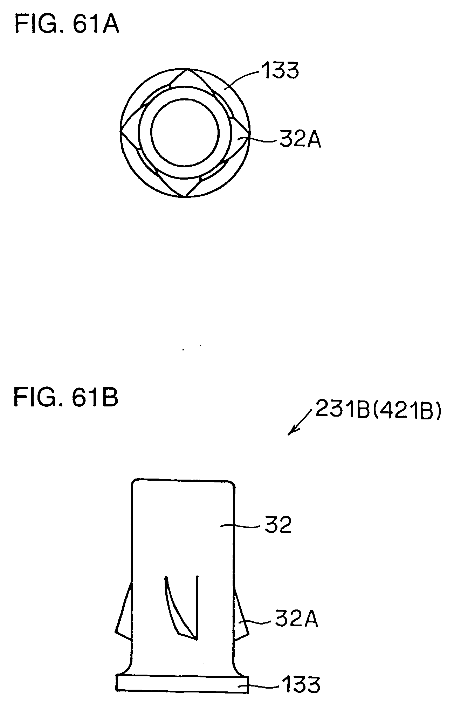

As a rotation stopper of T nut 231B and rivet 421B, a screw member 32A as a protruding portion extending outward from the outer peripheral surface of shaft 32 may be provided, as shown in Figs. 61A and 61B. Any shape may be employed provided that the function and effect of a rotation stopper are attained, other than screw member 32A.

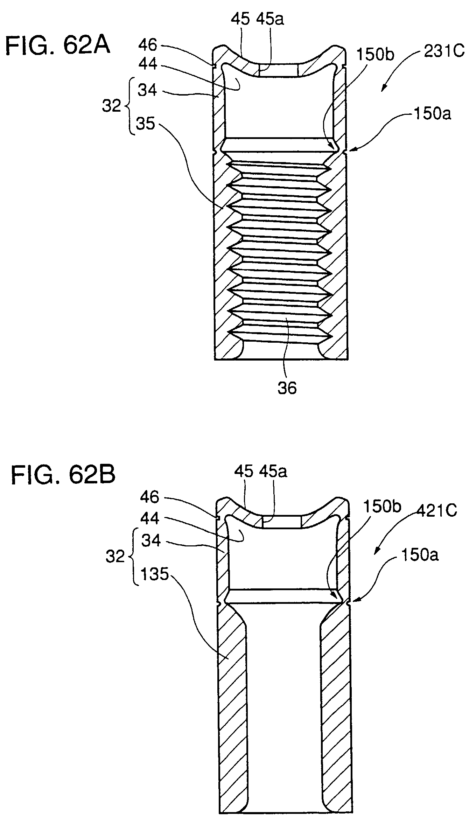

Figs. 62A and 62B show T nut 231C and rivet 421C as further modifications of T nut 231A and rivet 421A. T nut 231C and rivet 421C are different in that flange 133 is not provided, and other structure and function are the same. When recycle is not intended, annular groove 150a is unnecessary.

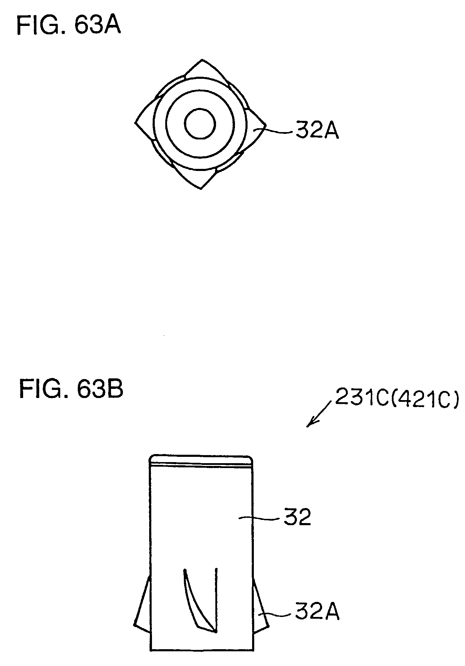

As a rotation stopper of T nut 231C and rivet 421C, a screw member 32A as a protruding portion extending outward from the outer peripheral surface of shaft 32 may be provided, as shown in Figs. 63A and 63B. Any shape may be employed provided that the function and effect of a rotation stopper are attained, other than screw member 32A.

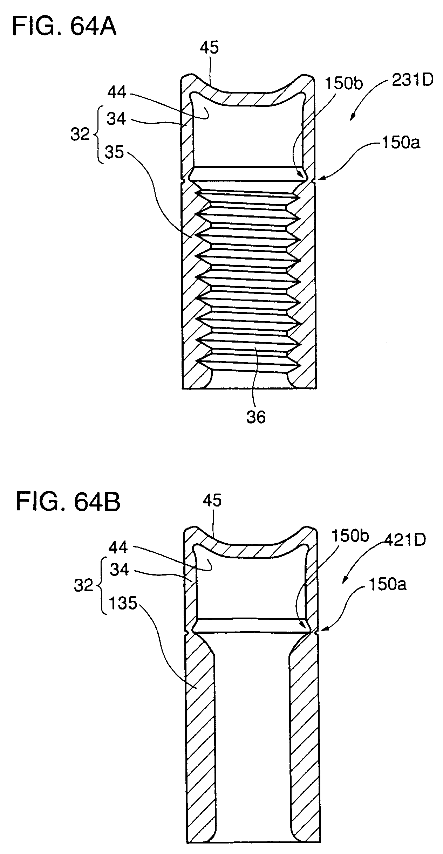

Figs. 64A and 64B show T nut 231D and rivet 421D which are further modifications of T nut 231C and rivet 421C. T nut 231D and rivet 421D are different in that cap portion 44 does not have opening 45a and that flarable portion 34 is not provided with groove 46. Except these points, the structure and function are the same. If recycle is not intended, annular groove 150a is unnecessary.

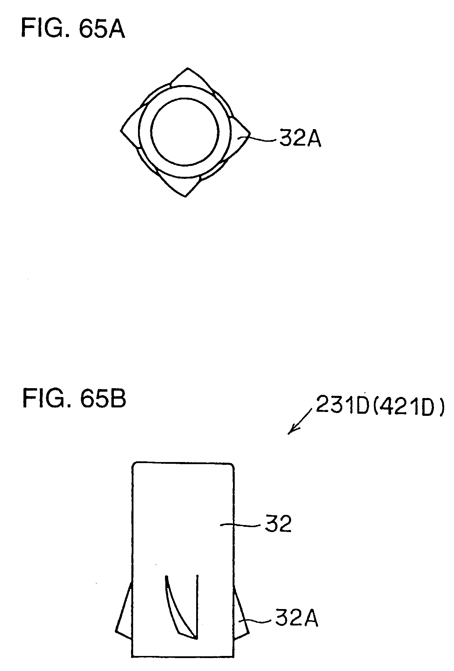

As a rotation stopper of T nut 231D and rivet 421D, a screw member 32A as a protruding portion extending outward from the outer peripheral surface of shaft 32 may be provided, as shown in Figs. 65A and 65B. Any shape may be employed provided that the function and effect of a rotation stopper are attained, other than screw member 32A.

As to the shape of the connecting region, not only the structure shown in Figs. 58 to 65 but also the structure shown in Figs. 5 to 24 and Fig. 29 may be applicable. Driving into the object of fixing is performed in the similar manner as described with reference to Figs. 25 to 28 and Figs. 30 to 33.

As to the position and cross sectional shape of annular groove 50, the structure shown in Figs. 39 and 40 may be employed.

### (Seventeenth Embodiment: Modification of T nut)

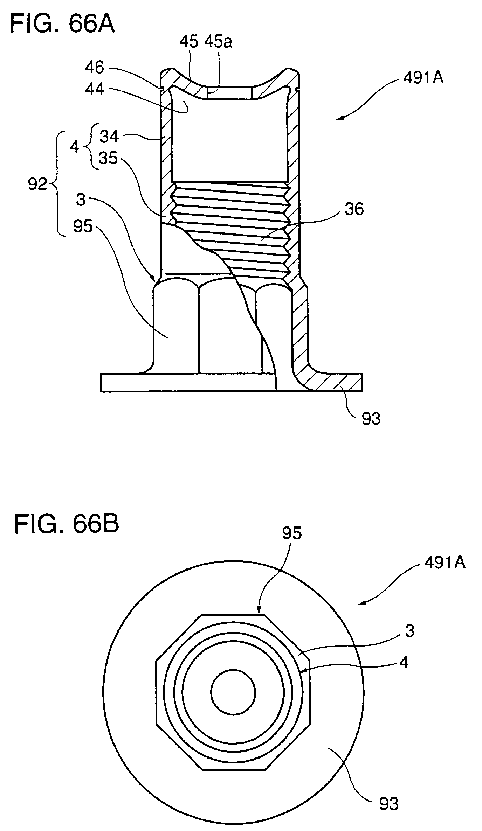

T nut 491A in accordance with the seventeenth embodiment of the present invention will be described with reference to Figs. 66A and 66B. T nut 491A of the present embodiment has a common shaft portion as T nut 181A in accordance with the fourteenth embodiment described above in that shaft portion 92 has a stepped portion 3, and a flarable portion 34 and female screw forming portion 35 at the hollow cylindrical portion 4 at the tip end side. T nut 491A differs from T nut 181A in that the enlarged cylindrical portion 95 on the proximal end on the side of flange portion from stepped portion 3 does not have a hollow cylindrical shape but an approximately regular octagonal shape viewed from the axial direction, and that flange 95 has a disk shape.

When T nut 491A having such a structure is driven into a through hole of plate material having approximately the same diameter as the hollow cylindrical portion 4 at the tip end side and press fit so that the enlarged cylindrical portion 95 on the proximal end of approximately regular octagonal shape bites the plate material, the enlarged cylindrical portion functions as the rotation stopper. As a result, though flange portion 93 has a flat disk shape without pawls, it does not cause rotation when fixed on the plate member and attains secure fixing.

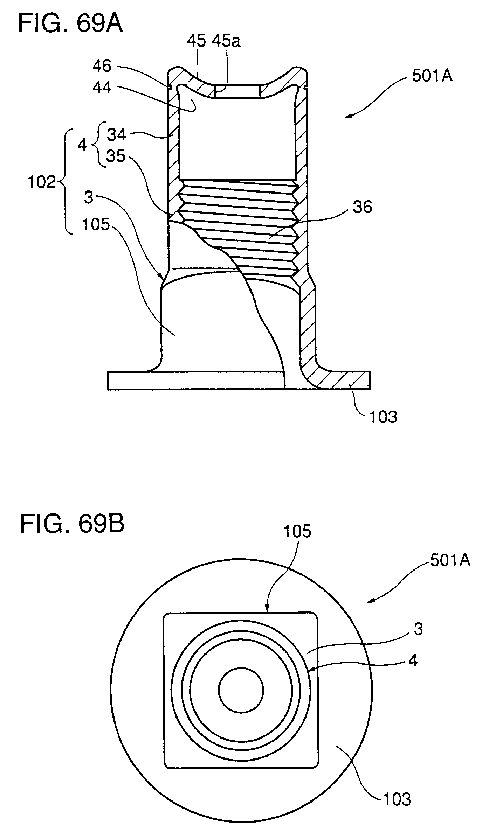

Though the enlarged cylindrical portion 95 of the proximal end is formed to have approximately regular octagonal shape when viewed from the axial direction, the shape is not limited thereto. For example, as in a T nut 501A shown in Figs. 69A and 69B, shaft portion 102 may have an enlarged cylindrical portion 105 on the proximal end which is formed to be approximately square when viewed from the axial direction. Further, as the shape of enlarged cylindrical portion 105 of the proximal end viewed from the axial direction, other polygonal shape such as a hexagon may be selected.

In the T nut of the present embodiment, stepped portion 3 is provided over the entire outer periphery of shaft portion 2. When the enlarged cylindrical portion of the proximal end is provided as a rotation stopper in the state of use as in the present embodiment, it is not always necessary to provide the stepped portion over the entire outer periphery of shaft portion 2. More specifically, the function of rotation stopper at the time of use can be attained so long as the stepped portion is provided at least partially at the outer periphery of the enlarged cylindrical portion on the proximal end closer to the side of the flange than the stepped portion and that portion is enlarged than the cylindrical portion of the tip and side.

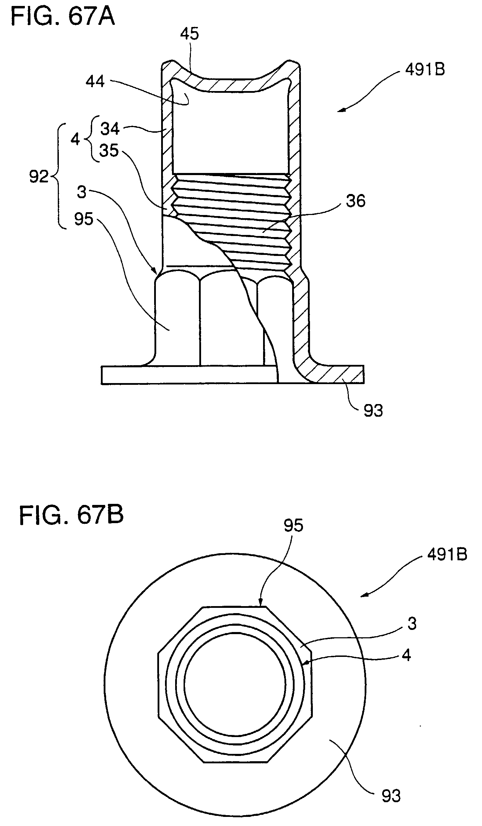

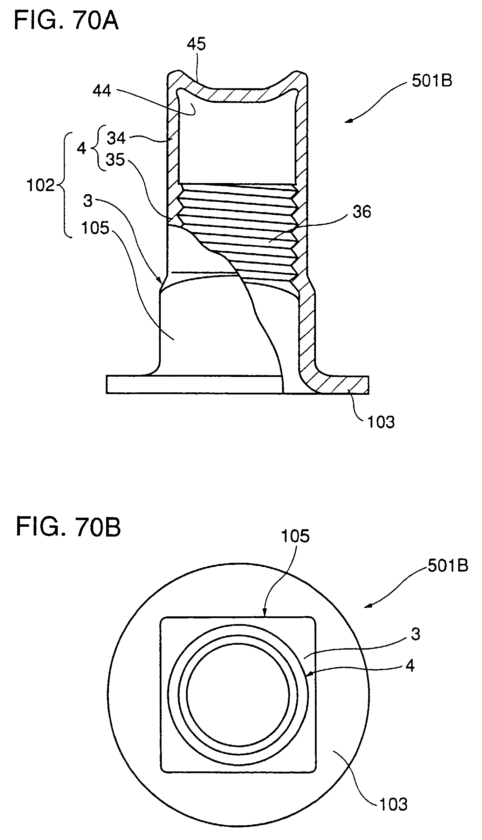

Figs 67 and 70 show T nuts 491B and 501B, respectively, which are further modifications of T nuts 491A and 501A. T nuts 491B and 501B are different in that cap portion 44 does not have opening 45a and that flarable portion 34 is not provided with groove 46. Except these points, the structure and function are the same. If recycling is intended, an annular groove may be provided at the hollow cylindrical portion 4 on the tip end side, as described in the embodiments above.

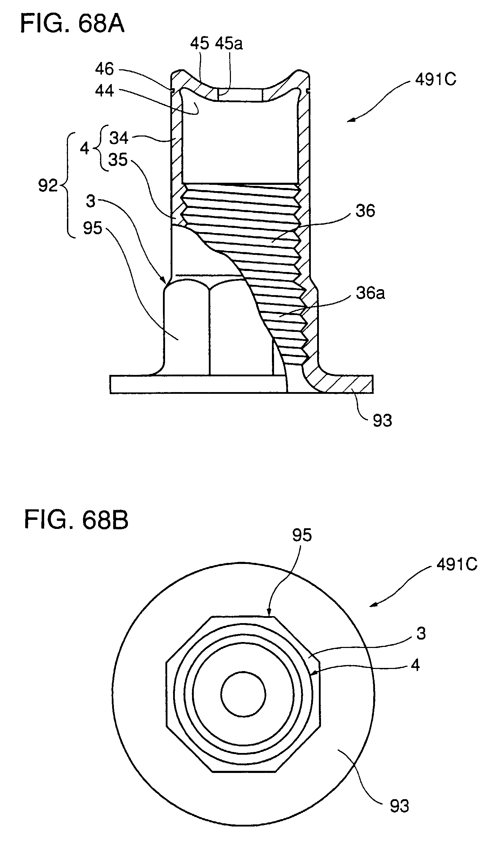

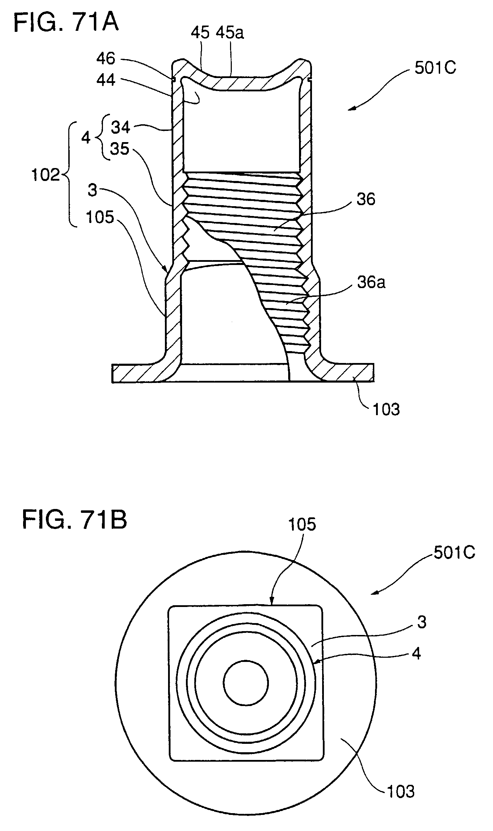

Fig. 68 shows T nut 491C and Fig. 71 shows a T nut 501C, as further modifications of T nuts 491A and 501A. T nuts 491C and 501C are different in that female screw 36a is formed additionally on the inner surface of enlarged cylindrical portion 105 on the proximal end side, and other structure and function are the same. The shape of the enlarged cylindrical portion on the side of the proximal end may be arbitrarily selected as needed. If recycling is intended, an annular groove may be provided on the hollow cylindrical portion 4 at the tip and side, as described in the embodiments above.

As to the shape of the connecting region, not only the structure shown in Figs. 66 to 71 but also the structure shown in Figs. 5 to 24 and Fig. 29 may be applicable. Driving into the object of fixing is performed in the similar manner as described with reference to Figs. 25 to 28 and Figs. 30 to 33.

### (Eighteenth Embodiment: Modification of T nut)

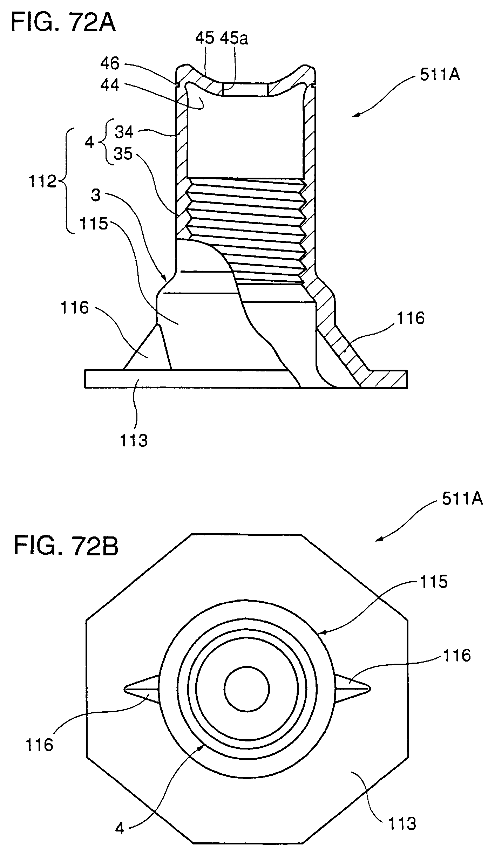

T nut 511A in accordance with the eighteenth embodiment of the present invention will be described with reference to Figs. 72A and 72B. T nut 511A in accordance with the present embodiment has a stepped portion 3 at shaft portion 112, and flarable portion 34 and female screw forming portion 35 at the hollow cylindrical portion 4 at the tip end side. In the vicinity of an interface between the outer periphery of enlarged cylindrical portion 115 on the proximal side and flange portion 113 on the side of flange portion 113 from stepped portion 3, a pair of approximately triangular projections 116 are formed at positions opposing to each other at 180°. Projections 116 are formed integral with flange portion 113 and enlarged cylindrical portion 115 on the proximal side, and bite the plate material when the nut is driven into the plate material, so that the projections attain the function of rotation stopper of T nut 511A. Though two projections 116 are provided in T nut 111A of the present embodiment, the number may be arbitrarily increased as needed, so as to reinforce the function of the rotation stopper.

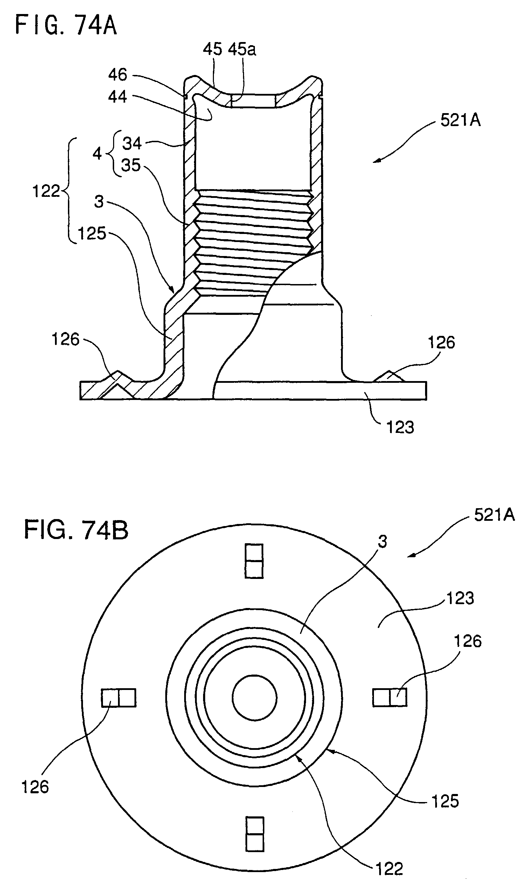

The function of rotation stopper similar to that attained by projections 116 of T nut 511A can also be attained by a T nut 521A shown in Figs. 74A and 74B. In this T nut, the enlarged cylindrical portion 125 on the proximal end has a hollow cylindrical shape similar to T nut 181A, and projections 126 are each provided by lifting a portion formed by parallel two cuttings in disk shaped flange portion 126 formed integral with flange portion 123, in place of the projections 116 of T nut 511A. In T nut 521A, there are four projections 126 at uniform intervals on flange portion 123. The number and position of projections 126 may be appropriately changed as needed.

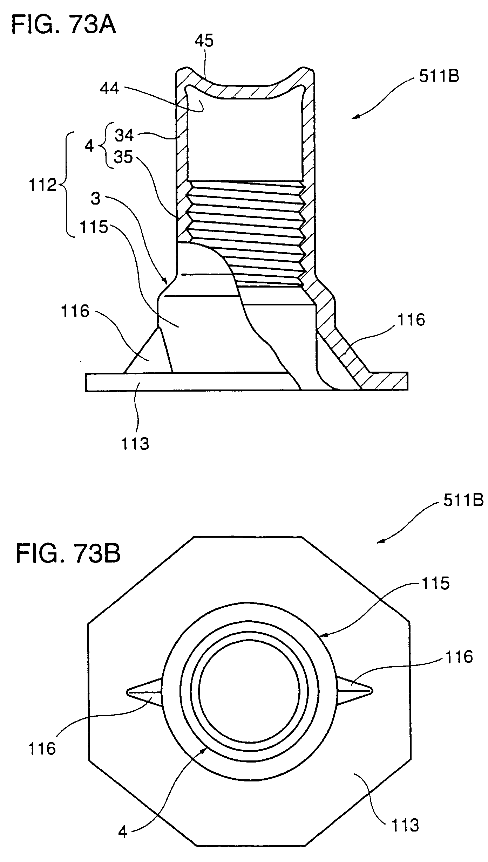

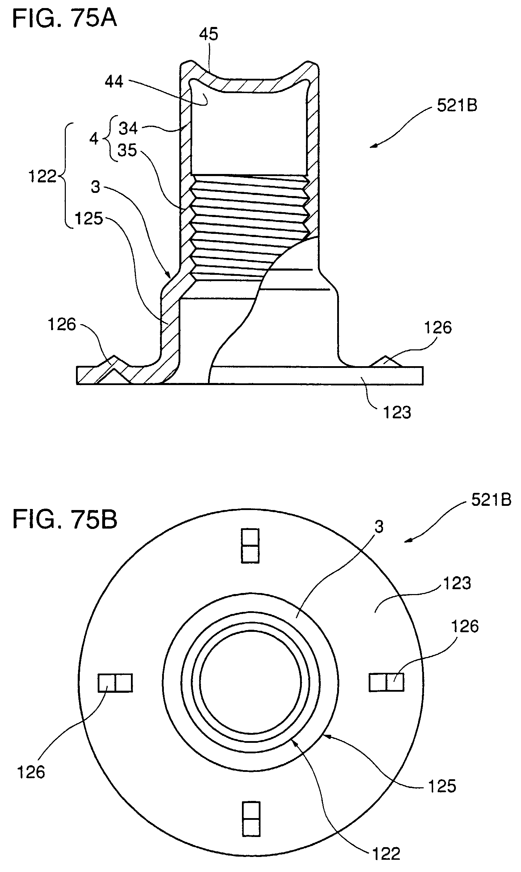

Figs. 73 and 75 show T nuts 511B and 521B, respectively, which are further modifications of T nuts 511A and 521A. T nuts 511B and 521B are different in that cap portion 44 does not have opening 45a and that flarable portion 34 is not provided with groove 46. Except these points, the structure and function are the same. If recycling is intended, an annular groove may be provided at the hollow cylindrical portion 4 on the tip and side, as described in the embodiments above.

As to the shape of the connecting region, not only the structure shown in Figs. 72 to 75 but also the structure shown in Figs. 5 to 24 and Fig. 29 may be applicable. Driving into the object of fixing is performed in the similar manner as described with reference to Figs. 25 to 28 and Figs. 30 to 33.

### (Nineteenth Embodiment: Shape of T nut 51A)

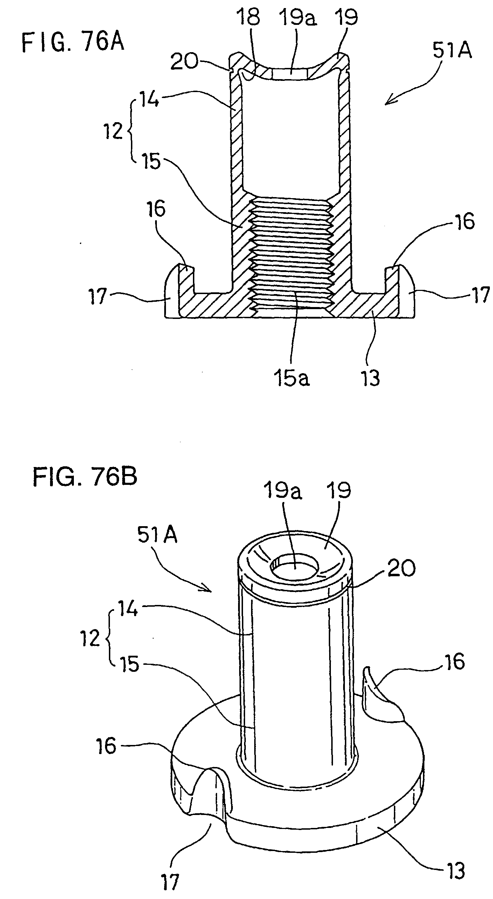

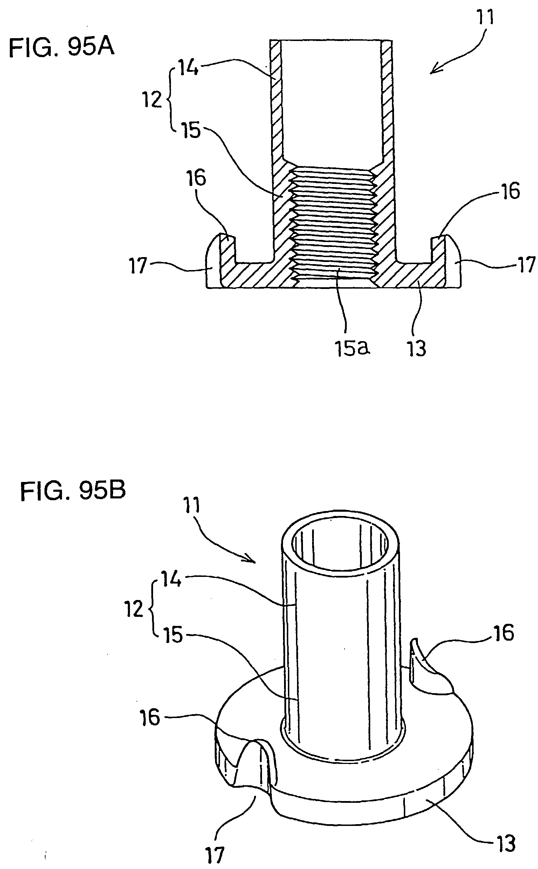

In T nut 51A in accordance with the nineteenth embodiment of the present invention, shaft portion 12 and flange portion 13 have basically the same shape as those of the conventional T nut 11 disclosed in U.S. Patent No. 5,238,344 described with reference to Fig. 95, as can be seen from Figs. 76A and 76B. Therefore, common components are denoted by the same reference characters and detailed description thereof will not be repeated.

T nut 51A in accordance with the present embodiment differs from the conventional T nut 11 in that cap portion 19 is integrally formed continuous from the tip end portion of flarable portion 14. In T nut 51A in accordance with the present embodiment, cap portion has a dent at the central portion, and in view of processing of female screw forming portion 15a using a ball tap, a bent shank tap or the like, an opening 19a is provided at the central portion.

Further, in a connection region between flarable portion 14 and cap portion 19, inner surface 18 of flarable portion 14 is provided recessed outward. More specifically, various shapes as shown in Figs. 3 to 11 may be used. Further, on an outer peripheral portion of cap portion 19 at the connecting region between flarable portion 14 and cap portion 19, an annular portion 19b protruding upward is provided. These shapes are examples only, and any structure may be used provided that the function and effect described below can be attained at the time when the T nut is driven.

In the example of Fig. 76, a groove 20 extending in the peripheral direction is provided on the outer peripheral surface of shaft portion 12 at the connecting region between flarable portion 14 and the cap portion 19. The groove 20 is to facilitate tearing of cap portion 19 at the time of driving as will be described later, and it is not always necessary.

As to the shape of the connecting region, not only the structure shown in Fig. 76 but also the structure shown in Figs. 5 to 24 and Fig. 29 may be applicable. Driving into the object of fixing is performed in the similar manner as described with reference to Figs. 25 to 28 and Figs. 30 to 33.

### (Twentieth Embodiment: Shape of T nut 51B)

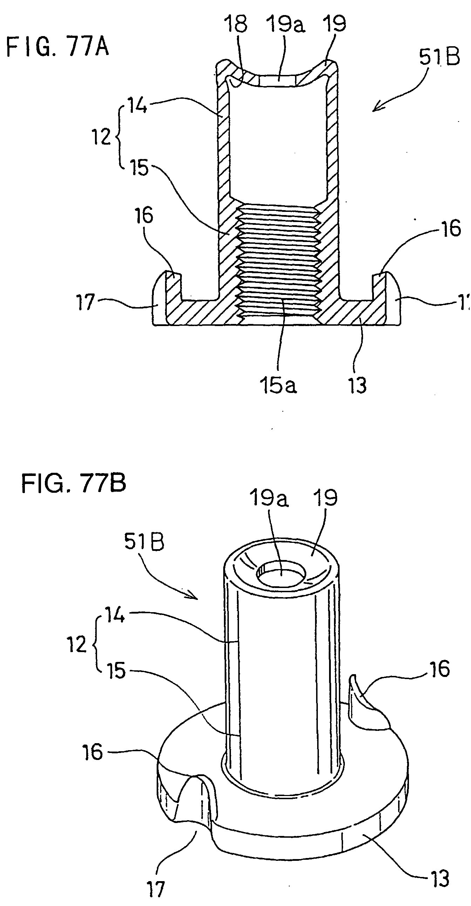

The shape of T nut 51B in accordance with the twentieth embodiment of the present invention is basically the same as that of T nut 51A in accordance with the nineteenth embodiment, as can be seen from Figs. 77A and 77B. Therefore, common components will be denoted by the same reference characters and detailed description thereof will not be repeated.

T nut 51B in accordance with the present embodiment differs from the T nut 51A in accordance with the nineteenth embodiment in that groove 20 is not provided, and except this point, the structure is the same.

As to the shape of the connecting region, not only the structure shown in Fig. 77 but also the structure shown in Figs. 5 to 24 and Fig. 29 may be applicable. Driving into the object of fixing is performed in the similar manner as described with reference to Figs. 25 to 28 and Figs. 30 to 33.

### (Twenty-First Embodiment: Shape of T nut 51C)

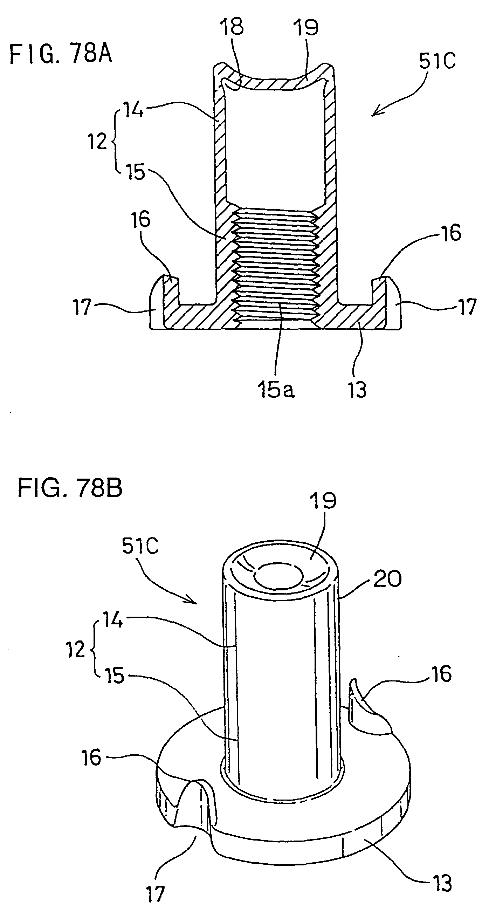

The shape of T nut 51C in accordance with the twenty-first embodiment of the present invention is basically the same as that of T nut 51A in accordance with the nineteenth embodiment, as can be seen from Figs. 78A and 78B. Therefore, common components will be denoted by the same reference characters and detailed description thereof will not be repeated.

T nut 51C of the present embodiment differs from T nut 51A in accordance with the nineteenth embodiment in that cap portion 45 does not have opening 45a and that groove 20 is not provided, and except these points, the structure is the same.

As to the shape of the connecting region, not only the structure shown in Fig. 78 but also the structure shown in Figs. 5 to 24 and Fig. 29 may be applicable. Driving into the object of fixing is performed in the similar manner as described with reference to Figs. 25 to 28 and Figs. 30 to 33.

### (Twenty-second Embodiment: Shape of T nut 51D)

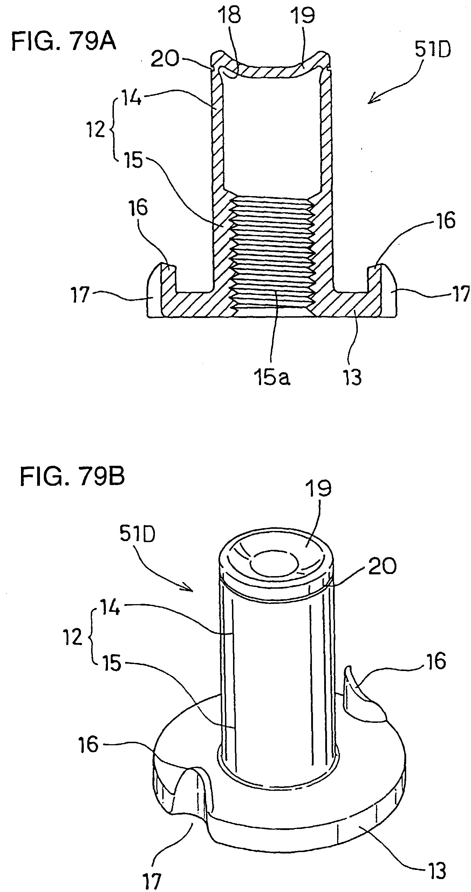

The shape of T nut 51D in accordance with the twenty-second embodiment of the present invention is basically the same as that of T nut 51A in accordance with the nineteenth embodiment, as can be seen from Figs. 79A and 79B. Therefore, common components will be denoted by the same reference characters and detailed description thereof will not be repeated.

T nut 51D in accordance with the present embodiment differs from T nut 51A in accordance with the nineteenth embodiment in that cap portion 45 does not have opening 45a, and except this point, the structure is the same.

As to the shape of the connecting region, not only the structure shown in Fig. 79 but also the structure shown in Figs. 5 to 24 and Fig. 29 may be applicable. Driving into the object of fixing is performed in the similar manner as described with reference to Figs. 25 to 28 and Figs. 30 to 33.

### (Twenty-Third Embodiment: Shape of Recycle T nut 51E)

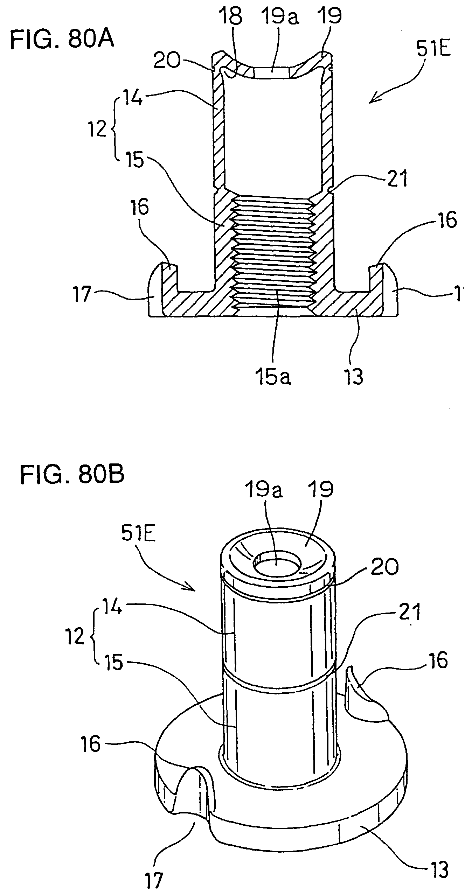

The shape of T nut 51E in accordance with the twenty-third embodiment of the present invention is basically the same as that of T nut 61A in accordance with the first embodiment, as can be seen from Figs. 80A and 80B. Therefore, common components will be denoted by the same reference characters and detailed description thereof will not be repeated.

T nut 51E in accordance with the present embodiment differs from T nut 61A in accordance with the first embodiment in that an annular groove 21 is provided over the entire outer periphery of shaft portion 12 at the interface between flarable portion 14 and female screw forming portion 15. Cross sectional shape of the annular groove 21 may be arbitrarily selected to be a U shape, V shape or a rectangular shape with one side opened, in accordance with the material of the T nut or associated processing property, or mechanical property such as tensile strength. Annular groove 21 is provided for the purpose of promoting recycling of object 19 of fixing, as the groove facilitates separation and recovery of the object constituting the product when the product on which T nut 51E is caulked and fixed is finished. The method of recovery at the time of recycling is as described with reference to Figs. 37 and 38.

As to the shape of the connecting region, not only the structure shown in Fig. 80 but also the structure shown in Figs. 5 to 24 and Fig. 29 may be applicable. Driving into the object of fixing is performed in the similar manner as described with reference to Figs. 25 to 28 and Figs. 30 to 33.

### (Twenty-Fourth Embodiment: Shape of Recycle T nut 51F)

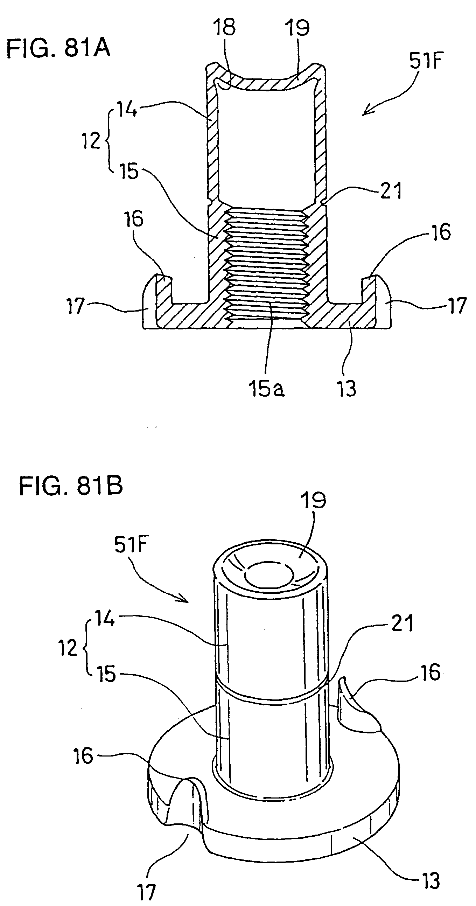

The shape of T nut 51F in accordance with the twenty-fourth embodiment of the present invention is basically the same as that of T nut 61D in accordance with the fourth embodiment, as can be seen from Figs. 81A and 81B. Therefore, common components will be denoted by the same reference characters and detailed description thereof will not be repeated.

T nut 51F in accordance with the present embodiment differs from T nut 61D in accordance with the fourth embodiment in that an annular groove 21 is provided over the entire outer periphery of shaft portion 12 at the interface between flarable portion 14 and female screw forming portion 15. Cross sectional shape of the annular groove 21 may be arbitrarily selected to be a U shape, V shape or a rectangular shape with one side opened, in accordance with the material of the T nut or associated processing property, or mechanical property such as tensile strength. Annular groove 21 is provided for the purpose of promoting recycling of object 19 of fixing, as the groove facilitates separation and recovery of the object constituting the product when the product on which T nut 51F is caulked and fixed is finished. The method of recovery at the time of recycling is as described with reference to Figs. 37 and 38.

As to the shape of the connecting region, not only the structure shown in Fig. 81 but also the structure shown in Figs. 5 to 24 and Fig. 29 may be applicable. Driving into the object of fixing is performed in the similar manner as described with reference to Figs. 25 to 28 and Figs. 30 to 33.

### (Twenty-Fifth Embodiment: Shape of T nut 61H)

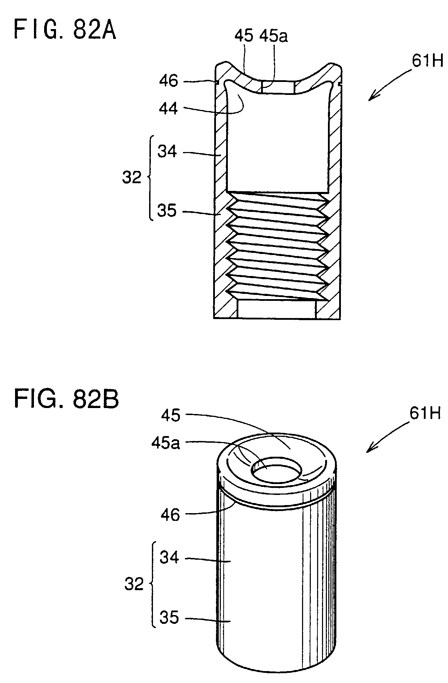

The shape of T nut 61H in accordance with the twenty-fifth embodiment of the present invention is basically the same as that of T nut 61A in accordance with the first embodiment, as can be seen from Figs. 82A and 82B. Therefore, common components will be denoted by the same reference characters and detailed description thereof will not be repeated.

T nut 61H in accordance with the present embodiment differs from T nut 61A in accordance with the first embodiment in that flange 33 is not provided.

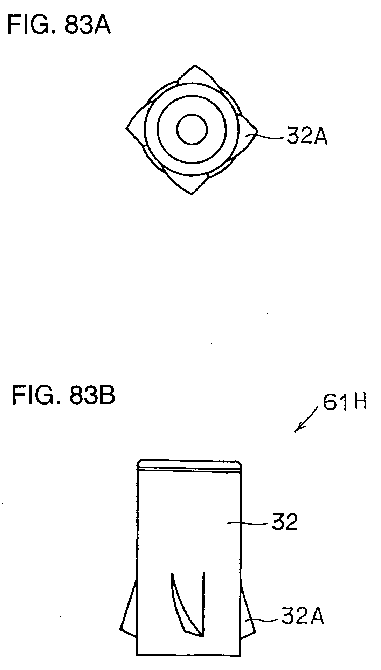

As rotation stopper of T nut 61H, screw members 32A as protruding portions extending outward from the outer peripheral surface of shaft portion 32 may be provided as shown in Figs. 83A and 83B. Any other shape may be used provided that the function and effect of rotation stopper can be attained, other than screw member 32A.

As to the shape of the connecting region, not only the structure shown in Fig. 82 but also the structure shown in Figs. 5 to 24 and Fig. 29 may be applicable. Driving into the object of fixing is performed in the similar manner as described with reference to Figs. 25 to 28 and Figs. 30 to 33.

### (Twenty-Sixth Embodiment: Shape of T nut 61I)

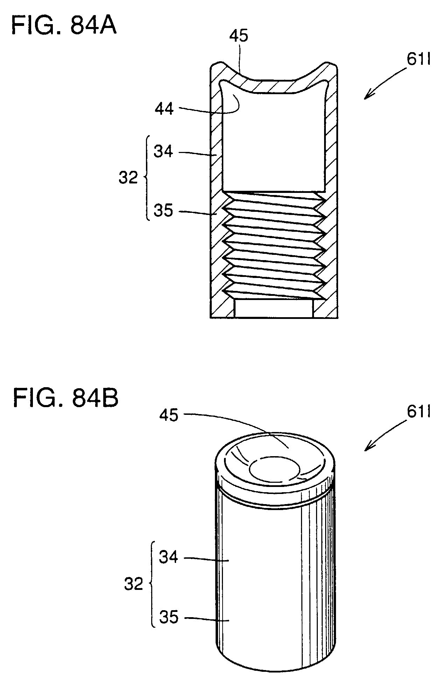

The shape of T nut 61I in accordance with the twenty-sixth embodiment of the present invention is basically the same as that of T nut 61D in accordance with the fourth embodiment, as can be seen from Figs. 84A and 84B. Therefore, common components will be denoted by the same reference characters and detailed description thereof will not be repeated.

T nut 61I in accordance with the present embodiment differs from T nut 61D in accordance with the fourth embodiment in that flange 33 is not provided.

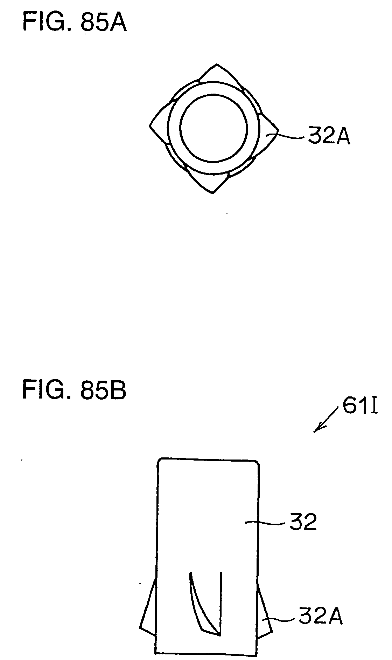

As rotation stopper of T nut 61I, screw members 32A as protruding portions extending outward from the outer peripheral surface of shaft portion 32 may be provided as shown in Figs. 85A and 85B. Any other shape may be used provided that the function and effect of rotation stopper can be attained, other than screw member 32A.

As to the shape of the connecting region, not only the structure shown in Fig. 84 but also the structure shown in Figs. 5 to 24 and Fig. 29 may be applicable. Driving into the object of fixing is performed in the similar manner as described with reference to Figs. 25 to 28 and Figs. 30 to 33.

### (Twenty-Seventh Embodiment: Outer Casing Member for a Bullet)

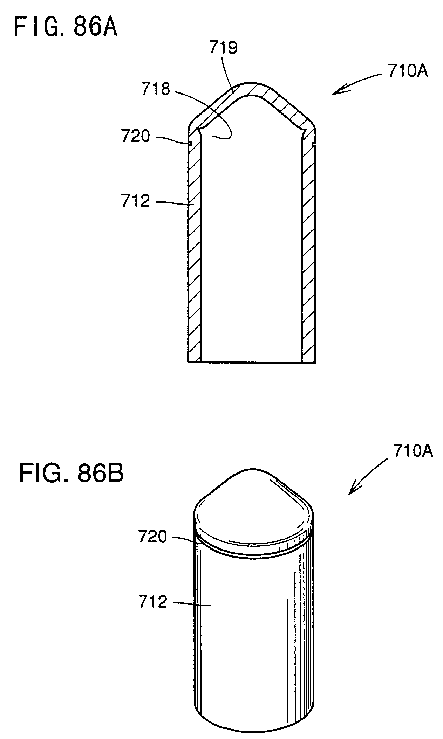

An upper casing member for a bullet in accordance with a twenty-seventh embodiment of the present invention will be described. The shape of outer casing member 710A for a bullet in accordance with the present invention is as shown in Figs. 86A and 86B, and it has a hollow shaft portion 712 and a cap portion 719 integrally formed continuously to the tip end portion of hollow shaft portion 712. In outer casing member 710 for a bullet in accordance with the present embodiment, the central portion of cap portion 719 is protruding outward. Further, at a connecting region between shaft portion 712 and cap portion 719, an inner surface 718 of a flarable portion 714 is provided recessed outward. As a specific shape, the structures of the connecting region shown in Figs. 5 to 24 and Fig. 29 may be used.

These shapes are examples only, and essentially, any shape may be used provided that when a pressing force is applied to the tip end surface of cap portion 719 in a direction from the side of cap portion 719 to shaft portion 712, a force is exerted to bend shaft portion 712 outward so that cap portion 719 goes off from shaft portion 712 and shaft portion 712 is bent outward by the force.

Further, a groove 720 extending in the peripheral direction is provided on an outer peripheral surface of the connecting region between shaft portion 712 and cap portion 719. Groove 720 is to facilitate tearing of cap portion 719 at the time of driving into the object, and it is not always necessary.

Because of the outer casing member 710A for a bullet having the above described structure, when outer casing member 710 for a bullet collides against an object, cap portion 719 at the tip end portion is surely torn off, causing explosion, and therefore the object can more effectively be destroyed by explosion. The outer casing member for a bullet is applicable not only to a small size bullet but also to a missile or the like, provided that it is of the type containing explosives therein.

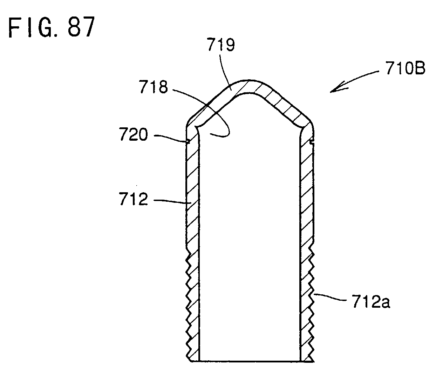

As a modification, in an outer casing member 710B for a bullet shown in Fig. 87, a male screw 712a is formed on an outer peripheral surface of shaft portion 712.

### (Twenty-Eighth Embodiment: Outer Casing Member for a Bullet)

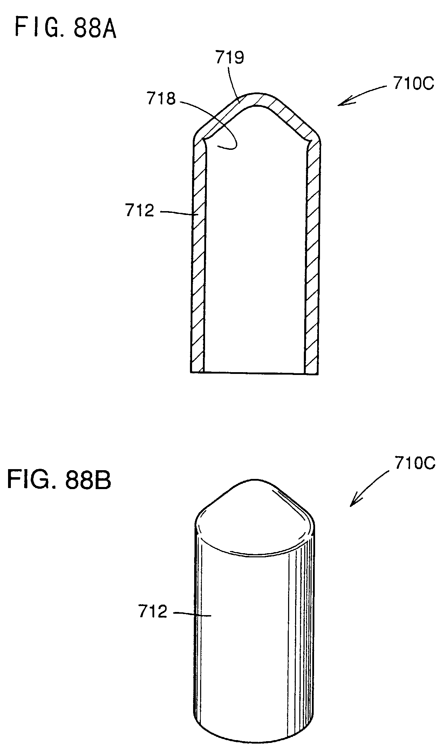

The outer casing member for a bullet in accordance with the twenty-eighth embodiment of the present invention will be described. The shape of outer casing member 710C for a bullet of the present embodiment is similar to that of outer casing member 710A for a bullet in accordance with the twenty-seventh embodiment described above, except that groove 720 is not provided, as can be seen from Figs. 88A and 88B.

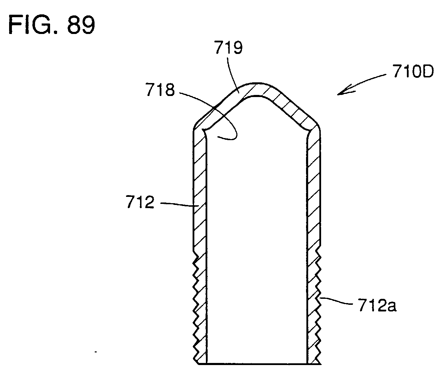

In an outer casing member 710D for a bullet as a modification shown in Fig. 89, a male screw 712a is formed on an outer peripheral surface of shaft portion 712.

### (Twenty-Ninth Embodiment: Outer Casing Member for a Bullet)

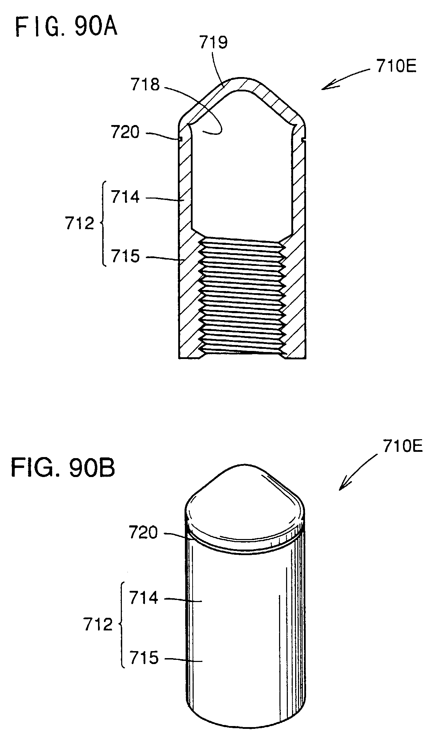

The outer casing member for a bullet in accordance with the twenty-ninth embodiment of the present invention will be described. The shape of outer casing member 710E for a bullet of the present embodiment is similar to that of outer casing member 710A for a bullet in accordance with the twenty-seventh embodiment described above, except that a female screw 715 is provided on an inner peripheral surface of shaft portion 712, as can be seen from Figs. 90A and 90B.

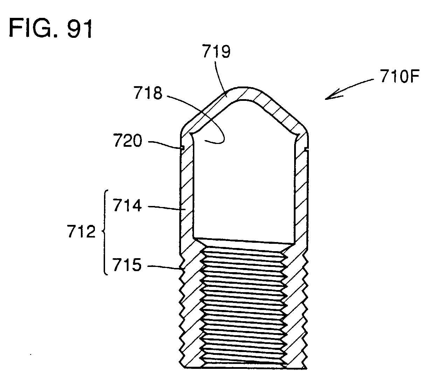

As a modification, an outer casing member 710F for a bullet shown in Fig. 91 has a male screw formed on an outer peripheral surface of shaft portion 712 and a female screw formed on the inner peripheral surface.

### (Thirtieth Embodiment: Outer Casing Member for a Bullet)

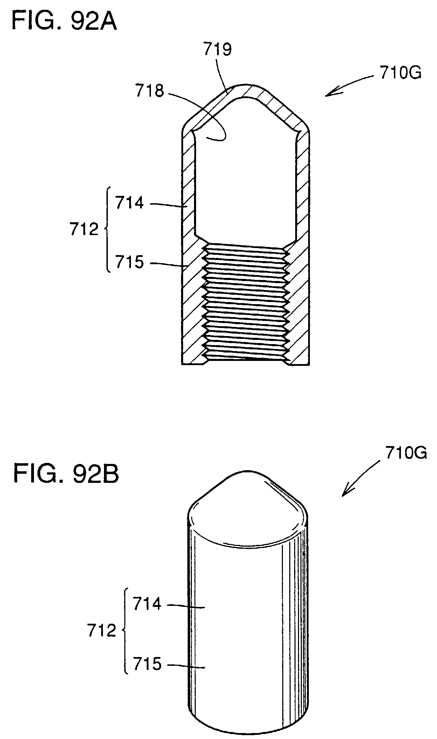

The outer casing member for a bullet in accordance with the thirtieth embodiment of the present invention will be described. The shape of outer casing member 710G for a bullet of the present embodiment is similar to that of outer casing member 710E for a bullet in accordance with the twenty-seventh embodiment described above, except that groove 720 is not provided, as can be seen from Figs. 92A and 92B.

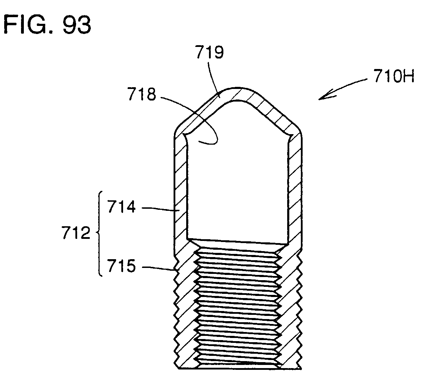

As a modification, an outer casing member 710H for a bullet shown in Fig. 93 has a male screw formed on an outer peripheral surface of shaft portion 712 and a female screw formed on the inner peripheral surface.

The shapes of the T nuts described in accordance with the first to twenty-sixth embodiment above are applicable as the shape of outer casing member for a bullet, and the shapes of outer casing members for bullets described with reference to the twenty-seventh to thirty-first embodiments are applicable as the shape of T nuts.

### (Thirty-First Embodiment: Modifications of T nut and Outer Casing Member for a Bullet)

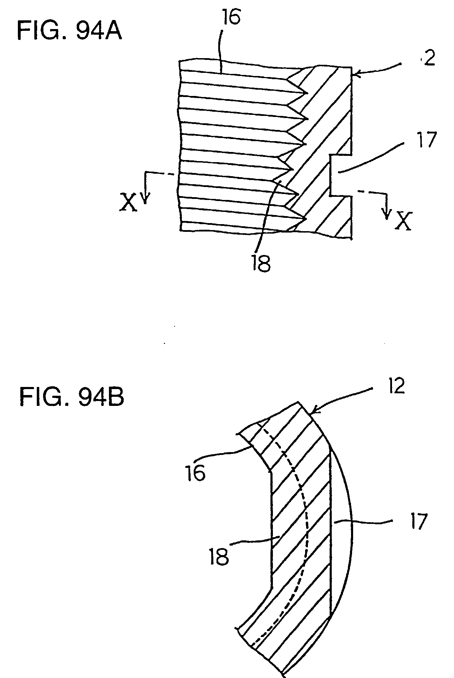

In the region where a screw is formed in the T nut and the outer casing member for a bullet in accordance with each of the above described embodiment, it is preferable that an irregular threaded portion is formed as locking means for preventing loosening of a bolt to be screwed therein. In order to make irregular part of the thread, a processing method may be employed in which an outer peripheral surface of female screw forming portion 16 at shaft portion 2 of a T nut is pressed inward to form a recessed portion 17 as can be seen from Figs. 94A and 94B. For example, two recessed portions 17 may be formed spaced by 180°. The recessed portions 17 may be formed by pinching prescribed portions of female screw forming portion 16 by a pair of appropriate tools and strongly pressing the tools toward the female screw forming portion 16. As such irregular portion 18 of the female screw is provided, the bolt cannot be inserted unless it is rotated relatively strongly, and therefore the screwed state is locked and the loosening of the bolt can be prevented.

As described above, the gist of the present invention resides in the shape of the connecting region between the flarable portion (shaft portion) and the cap portion. Provided that when a pressing force is applied to a tip surface of cap portion in a direction from the side of the cap portion to the flarable portion (shaft portion), a force is exerted to bend flarable portion (shaft portion) outward so that the cap portion goes off from the flarable portion (shaft portion) and the flarable portion is bent outward by the force, any shape may be adapted, not limited to the shapes described in each of the embodiments above.

Because of this structure, when the T nut (outer casing member for a bullet) is driven into an object, the object is ejected by the cap portion, and therefore it is unnecessary to provide in advance a receiving hole in the object to which the metal fastening member (outer casing member for a bullet) is driven.

As a result, when the present invention is applied to a metal fastening member, driving of a T nut into an object of fixing by automatic control without the necessity of providing a receiving hole in advance becomes possible, so that working efficiency is improved and the cost of driving can be reduced.

When the present invention is applied to an outer casing member for a bullet, an outer casing member for a bullet of which tip end portion surely tears simultaneously with the collision against the object can be obtained.

Further, the shapes of the cap portion, shaft portion and the flange portion disclosed in the embodiments above may be appropriately combined, and not limited to those of the embodiments described above.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A metal fastening member formed of an integral metal material, comprising:
a cylindrical shaft portion (32) having a flarable portion (34) which is to be caulked, and a shaft body portion (35) provided continuous from the flarable portion (34); and
a cap portion (45) provided continuous from an end portion of said flarable portion (34) on an opposite side to said shaft body portion (35); wherein
a connecting region between said flarable portion (34) and said cap portion (45) has such a shape that when a pressing force is applied to a tip end surface of said cap portion (45) in a direction from the side of the cap portion (45) to the flarable portion (34), a force is exerted to bend said flarable portion (34) outward, whereby said cap portion (45) goes off from said flarable portion (34) and said flarable portion (34) is bent outward by the force.

2. The metal fastening member according to claim 1, wherein an inner surface (44) of said flarable portion (34) is recessed outward at the connecting region between said flarable portion (34) and said cap portion (45).

3. The metal fastening member according to claim 2, wherein an inner surface (44) of said flarable portion (34) is formed curved gradually outward toward said cap portion (45) at the connecting region between said flarable portion (34) and said cap portion (45).

4. The metal fastening member according to claim 2, wherein said flarable portion (34) is formed to have its thickness gradually reduced toward said cap portion (45) at the connecting region between said flarable portion (34) and said cap portion (45).

5. The metal fastening member according to claim 1, wherein a groove (46) is provided extending in a peripheral direction on an outer peripheral surface of said shaft portion (32) at the connecting region between said flarable portion (34) and said cap portion (45).

6. The metal fastening member according to claim 1, wherein said cap portion (45) has such a shape that has a dent at a central portion.

7. The metal fastening member according to claim 1, wherein said cap portion (45) has an opening (45a) at a central portion.

8. The metal fastening member according to claim 7, wherein a female screw (47a) is provided on an end surface (47) of said opening (45a).

9. The metal fastening member according to claim 1, wherein said cap portion (45) has such a shape that is protruded at a central portion.

10. The metal fastening member according to claim 1, wherein a female screw (36) is formed at least partially on a region of an inner periphery of said shaft body portion (35).

11. The metal fastening member according to claim 1, further comprising a flange portion (33) extending outward formed at an end portion of said shaft body portion (35) opposite to said flarable portion (34).

12. The metal fastening member according to claim 11, wherein said flange (33) has a polygonal shape, and includes a pawl (37, 39) extending toward said cap portion on an outer periphery of said flange.

13. The metal fastening member according to claim 11, wherein said flange (33) has a polygonal shape and includes a protruded portion (116, 126) extending toward said cap portion on said flange.

14. A metal fastening member according to claim 11, wherein said flange (13) has a circular shape and includes a pawl (16, 17) extending toward said cap portion on an outer periphery of said flange.

15. The metal fastening member according to claim 11, wherein said flange (13) has a circular shape and includes a protruded portion (116, 126) extending toward said cap portion on said flange.

16. The metal fastening member according to claim 1, comprising a pawl (32a) extending outward on an outer periphery of said shaft portion.

17. The metal fastening member according to claim 1, further comprising a thin portion (50) provided by partially making thinner thickness of said shaft portion (32), in an approximately annular region constituting periphery of said shaft portion (32) on a side closer to said shaft body portion (35) than that region of said flarable portion (34) which is to be bent for caulking, said thin portion maintaining sufficient strength not to be torn by a force acting in an axial direction in the state of use when the fastening member is fixed and caulked in an object of fixing, and being torn when a tractive force not smaller than a prescribed magnitude is exerted on the axial direction, allowing separation of said shaft portion into two.

18. The metal fastening member according to claim 1, wherein said flarable portion (134) of said shaft portion has an inner diameter larger than inner diameter of said shaft body portion (35) and an outer diameter larger than outer diameter of said shaft body portion (35).

19. The metal fastening member according to claim 1, wherein said shaft body portion (35) of said shaft portion has an inner diameter larger than inner diameter of said flarable portion (34) and an outer diameter larger than outer diameter of said flarable portion (34).

20. The metal fastening member according to claim 10, wherein said screw portion is provided with a region at least partially made irregular (18).

21. A metal fastening member formed of an integral metal material, comprising:
a cylindrical shaft portion (32) having a flarable portion (34) which is to be caulked, and a shaft body portion (35) provided continuous from the flarable portion (34);
a cap portion (45) provided continuous to an end portion of said flarable portion (34) opposite to said shaft body portion (35); and
a flange portion (33) extending outward at an end portion of said shaft body portion (35) opposite to said flarable portion (34); wherein
a female screw (36) is formed at least on a region of an inner periphery of said shaft body portion (35);
said flange (33) has a polygonal shape and includes a pawl (37, 39) extending toward said cap portion on an outer periphery of said flange (33);
said cap portion (45) has an opening (45a) with a female screw (47a) formed on an end surface (47) of the opening;
wherein
at the connecting region between said flarable portion (34) and said cap portion (45), an inner surface (44) of said flarable portion (34) is recessed outward, so that when a pressing force is applied to a tip end surface of said cap portion (45) in a direction from the side of the cap portion (45) to the flarable portion (34), a force is exerted to bend said flarable portion (34) outward, whereby said cap portion (45) goes off from said flarable portion (34) and said flarable portion (34) is bent outward by the force.

22. The metal fastening member according to claim 21, wherein a groove (46) extending in a peripheral direction on an outer peripheral surface of said shaft portion (32) is provided at a connecting region between said flarable portion (34) and said cap portion (45).

23. The metal fastening member according to claim 21, wherein an inner surface (44) of said flarable portion (34) is provided curved gradually outward toward said cap portion (45) at the connecting region between said flarable portion (34) and said cap portion (45).

24. The metal fastening member according to claim 21, wherein said flarable portion (34) is formed to have its thickness gradually made thinner toward said cap portion (45) at the connecting region between said flarable portion (34) and said cap portion (45).

25. The metal fastening member according to claim 21, further comprising a thin portion (50) provided by partially making thinner thickness of said shaft portion (32), in an approximately annular region constituting periphery of said shaft portion (32) on a side closer to said shaft body portion (35) than that region of said flarable portion (34) which is to be bent for caulking, said thin portion maintaining sufficient strength not to be torn by a force acting in an axial direction in the state of use when the fastening member is fixed and caulked in an object of fixing, and being torn when a tractive force not smaller than a prescribed magnitude is exerted on the axial direction, allowing separation of said shaft portion into two.

26. The metal fastening member according to claim 21, wherein said flarable portion (134) of said shaft portion has an inner diameter larger than inner diameter of said shaft body portion (35) and an outer diameter larger than outer diameter of said shaft body portion (35).

27. The metal fastening member according to claim 21, wherein said screw portion is provided with a region at least partially made irregular (18).

28. A metal fastening member formed of an integral metal material, comprising:
a cylindrical shaft portion (32) having a flarable portion (34) which is to be caulked, and a shaft body portion (35) provided continuous from the flarable portion (34);
a cap portion (45) provided continuous to an end portion of said flarable portion (34) opposite to said shaft body portion (35); and
a flange portion (33) extending outward at an end portion of said shaft body portion (35) opposite to said flarable portion (34); wherein
a female screw (36) is formed at least on a region of an inner periphery of said shaft body portion (35);
said flange (33) has a circular shape and includes a pawl (37, 39) extending toward said cap portion on an outer periphery of said flange (33);
said cap portion (45) has an opening (45a) with a female screw (47a) formed on an end surface (47) of the opening;
wherein
at the connecting region between said flarable portion (34) and said cap portion (45), an inner surface (44) of said flarable portion (34) is recessed outward, so that when a pressing force is applied to a tip end surface of said cap portion (45) in a direction from the side of the cap portion (45) to the flarable portion (34), a force is exerted to bend said flarable portion (34) outward, whereby said cap portion (45) goes off from said flarable portion (34) and said flarable portion (34) is bent outward by the force.

29. The metal fastening member according to claim 28, wherein a groove (46) extending in a peripheral direction on an outer peripheral surface of said shaft portion (32) is provided at a connecting region between said flarable portion (35) and said cap portion (45).

30. The metal fastening member according to claim 28, wherein an inner surface (44) of said flarable portion (34) is provided curved gradually outward toward said cap portion (45) at the connecting region between said flarable portion (34) and said cap portion (45).

31. The metal fastening member according to claim 28, wherein said flarable portion (34) is formed to have its thickness gradually made thinner toward said cap portion (45) at the connecting region between said flarable portion (34) and said cap portion (45).

32. The metal fastening member according to claim 28, further comprising a thin portion (50) provided by partially making thinner thickness of said shaft portion (32), in an approximately annular region constituting periphery of said shaft portion (32) on a side closer to said shaft body portion (35) than that region of said flarable portion (34) which is to be bent for caulking, said thin portion maintaining sufficient strength not to be torn by a force acting in an axial direction in the state of use when the fastening member is fixed and caulked in an object of fixing, and being torn when a tractive force not smaller than a prescribed magnitude is exerted on the axial direction, allowing separation of said shaft portion into two.

33. The metal fastening member according to claim 28, wherein said flarable portion (134) of said shaft portion has an inner diameter larger than inner diameter of said shaft body portion (35) and an outer diameter larger than outer diameter of said shaft body portion (35).

34. The metal fastening member according to claim 28, wherein said screw portion is provided with a region at least partially made irregular (18).

35. A metal fastening member formed of an integral metal material, comprising:
a cylindrical shaft portion (32) having a flarable portion (34) which is to be caulked, and a shaft body portion (35) provided continuous from the flarable portion (34);
a cap portion (45) provided continuous to an end portion of said flarable portion (34) opposite to said shaft body portion (35); and
a flange portion (33) extending outward at an end portion of said shaft body portion (35) opposite to said flarable portion (34); wherein
said shaft body portion (35) of said shaft portion has an inner diameter lager than an inner diameter of said flarable portion and an outer diameter larger than an outer diameter of said flarable portion;
a female screw (36) is formed at least on a region of an inner periphery of said shaft body portion (35);
said flange (33) has a polygonal shape and includes a pawl (37, 39) extending toward said cap portion on an outer periphery of said flange (33);
said cap portion (45) has an opening (45a) with a female screw (47a) formed on an end surface (47) of the opening;
wherein
at the connecting region between said flarable portion (34) and said cap portion (45), an inner surface (44) of said flarable portion (34) is recessed outward, so that when a pressing force is applied to a tip end surface of said cap portion (45) in a direction from the side of the cap portion (45) to the flarable portion (34), a force is exerted to bend said flarable portion (34) outward, whereby said cap portion (45) goes off from said flarable portion (34) and said flarable portion (34) is bent outward by the force.

36. The metal fastening member according to claim 35, wherein a groove (46) extending in a peripheral direction on an outer peripheral surface of said shaft portion (32) is provided at a connecting region between said flarable portion (34) and said cap portion (45).

37. The metal fastening member according to claim 35, wherein an inner surface (44) of said flarable portion (34) is provided curved gradually outward toward said cap portion (45) at the connecting region between said flarable portion (34) and said cap portion (45).

38. The metal fastening member according to claim 35, wherein said flarable portion (34) is formed to have its thickness gradually made thinner toward said cap portion (45) at the connecting region between said flarable portion (34) and said cap portion (45).

39. The metal fastening member according to claim 35, further comprising a thin portion (50) provided by partially making thinner thickness of said shaft portion (32), in an approximately annular region constituting periphery of said shaft portion (32) on a side closer to said shaft body portion (35) than that region of said flarable portion (34) which is to be bent for caulking, said thin portion maintaining sufficient strength not to be torn by a force acting in an axial direction in the state of use when the fastening member is fixed and caulked in an object of fixing, and being torn when a tractive force not smaller than a prescribed magnitude is exerted on the axial direction, allowing separation of said shaft portion into two.

40. The metal fastening member according to claim 35, wherein said flarable portion (134) of said shaft portion has an inner diameter larger than inner diameter of said shaft body portion (35) and an outer diameter larger than outer diameter of said shaft body portion (35).

41. The metal fastening member according to claim 35, wherein said screw portion is provided with a region at least partially made irregular (18).

42. A metal fastening member formed of an integral metal material, comprising:
a cylindrical shaft portion (32) having a flarable portion (34) which is to be caulked, and a shaft body portion (35) provided continuous from the flarable portion (34);
a cap portion (45) provided continuous to an end portion of said flarable portion (34) opposite to said shaft body portion (35); and
a flange portion (33) extending outward at an end portion of said shaft body portion (35) opposite to said flarable portion (34); wherein
said shaft body portion (35) of said shaft portion has an inner diameter lager than an inner diameter of said flarable portion and an outer diameter larger than an outer diameter of said flarable portion;
a female screw (36) is formed at least on a region of an inner periphery of said shaft body portion (35);
said flange (33) has a circular shape and includes a pawl (37, 39) extending toward said cap portion on an outer periphery of said flange (33);
said cap portion (45) has an opening (45a) with a female screw (47a) formed on an end surface (47) of the opening;
wherein
at the connecting region between said flarable portion (34) and said cap portion (45), an inner surface (44) of said flarable portion (34) is recessed outward, so that when a pressing force is applied to a tip end surface of said cap portion (45) in a direction from the side of the cap portion (45) to the flarable portion (34), a force is exerted to bend said flarable portion (34) outward, whereby said cap portion (45) goes off from said flarable portion (34) and said flarable portion (34) is bent outward by the force.

43. The metal fastening member according to claim 42, wherein a groove (46) extending in a peripheral direction on an outer peripheral surface of said shaft portion (32) is provided at a connecting region between said flarable portion (34) and said cap portion (45).

44. The metal fastening member according to claim 42, wherein an inner surface (44) of said flarable portion (34) is provided curved gradually outward toward said cap portion (45) at the connecting region between said flarable portion (34) and said cap portion (45).

45. The metal fastening member according to claim 42, wherein said flarable portion (34) is formed to have its thickness gradually made thinner toward said cap portion (45) at the connecting region between said flarable portion (34) and said cap portion (45).

46. The metal fastening member according to claim 42, further comprising a thin portion (50) provided by partially making thinner thickness of said shaft portion (32), in an approximately annular region constituting periphery of said shaft portion (32) on a side closer to said shaft body portion (35) than that region of said flarable portion (34) which is to be bent for caulking, said thin portion maintaining sufficient strength not to be torn by a force acting in an axial direction in the state of use when the fastening member is fixed and caulked in an object of fixing, and being torn when a tractive force not smaller than a prescribed magnitude is exerted on the axial direction, allowing separation of said shaft portion into two.

47. The metal fastening member according to claim 42, wherein said flarable portion (134) of said shaft portion has an inner diameter larger than inner diameter of said shaft body portion (35) and an outer diameter larger than outer diameter of said shaft body portion (35).

48. The metal fastening member according to claim 42, wherein said screw portion is provided with a region at least partially made irregular (18).

49. An outer casing member for a bullet formed of an integral metal material, comprising a cylindrical shaft portion (712) and a cap portion (719) provided continuous from one end of said shaft portion (712) and having a protruded central portion, wherein
a connecting region between said shaft portion (712) and said cap portion (719) has such a shape that when a pressing force is applied to a tip end surface of said shaft portion (712) in a direction from the side of the cap portion (719) to the shaft portion (712), a force is exerted to bend said shaft portion (712) outward so that said cap portion (719) goes off from said shaft portion (712) and said shaft portion (712) is bent outward.

50. The outer casing member for a bullet according to claim 49, wherein an inner surface (718) of said shaft portion (712) is recessed outward at the connecting region between said shaft portion (712) and said cap portion (719).

51. The outer casing member for a bullet according to claim 49, wherein an inner surface of said shaft portion (712) is formed curved gradually outward toward said cap portion (719) at the connecting region between said shaft portion (712) and said cap portion (719).

52. The outer casing member for a bullet according to claim 49, wherein said shaft portion (712) is formed to have its thickness gradually reduced toward outside, toward said cap portion (719) in the connecting region between said shaft portion (712) and said cap portion (719).

53. The outer casing member for a bullet according to claim 49, further comprising a groove (720) provided extending in a peripheral direction on an outer peripheral surface at the connecting region between said shaft portion (712) and said cap portion (719).

54. The outer casing member for a bullet according to claim 49, wherein a female screw (715) is formed at least on a region of an inner periphery of said shaft portion (712).

55. The outer casing member for a bullet according to claim 49, wherein a male screw (712a) is formed at least on a region of an outer periphery of said shaft portion (712).

56. The outer casing member for a bullet according to claim 54, wherein a region having at least a portion made irregular is provided on said screw portion.
